# EUROPEAN PATENT APPLICATION

(11) **EP 4 518 502 A1**
(43) Date of publication of application: **05.03.2025**
(21) Application number: 22938902.8
(22) Date of filing: 25.04.2022
(51) Int. Cl.: H04W 72/12

(54) **COMMUNICATION METHOD AND DEVICES**

(71) Applicant: GUANGDONG OPPO MOBILE TELECOMMUNICATIONS CORP., LTD., Dongguan, Guangdong 523860 (CN)
(72) Inventor: QUAN, Yingqiao, Dongguan, Guangdong 523860 (CN); HUANG, Lei, Singapore 049483 (SG); LU, Liuming, Dongguan, Guangdong 523860 (CN); HOU, Ronghui, Dongguan, Guangdong 523860 (CN); LUO, Chaoming, Dongguan, Guangdong 523860 (CN)
(74) Representative: RGTH
(86) International application number: PCT/CN2022/089124
(87) International publication number: WO 2023/206045

(57) **Abstract**

Provided in the present application are a communication method, a first device and a second device. The communication method comprises: when a first device establishes direct connectivity communication with a second device which operates on the same link, performing frame transmission between the first device and the second device by using an enhanced multi-link operation, wherein at least one of the first device and the second device is a device that supports the enhanced multi-link operation or a device that operates on the enhanced multi-link operation, In the embodiments of the present application, an enhanced multi-link operation can be used when direct connectivity communication is established between a plurality of devices, such that a link communication capacity is improved by means of the enhanced multi-ink operation, thereby improving frame transmission efficiency.

## Description

### TECHNICAL FIELD

The present application relates to the field of communications, and in particular, to a communication method and a device.

### BACKGROUND

An enhanced multi-link operation enables a device to have the capability to switch spatial streams between different links, increasing the link communication capacity through spatial reuse manner. The spatial reuse manner is implemented by switching available spatial streams on other links to a specified link to achieve multi-spatial stream transmission on the specified link, thereby increasing the communication capacity of a single link. However, the enhanced multi-link operation is not currently effectively used in direct transmission.

### SUMMARY

The embodiments of the present application provide communication methods and devices, which may effectively use enhanced multi-link operation in direct transmission.

The embodiments of the present application provide a communication method, applied to a first device, which includes:
in a case where the first device establishes direct link with a second device working on a same link, performing frame transmission between the first device and the second device by using an enhanced multi-link operation;
where at least one of the first device and the second device is a device supporting the enhanced multi-link operation or a device working in the enhanced multi-link operation.

The embodiments of the present application provide a communication method, applied to a second device, which includes:
performing, by the second device, mode switching of the enhanced multi-link operation with the first device for performing any of the above methods, after interacting with the first device for first capability information.

The embodiments of the present application provide a communication method, applied to a first device, which includes:
establishing a direct link relationship between a first STA affiliated with the first device and a second STA affiliated with the a second device; and
performing frame transmission by using an enhanced multi-link operation between a the first STA affiliated with the first device and a the second STA affiliated with the second device according to the direct link relationship;
where the first STA affiliated with the first device sends a sixth frame to the second STA affiliated with the second device in the a form of a single-link single-spatial stream.

The embodiments of the present application provide a communication method, applied to a second device, which includes:
establishing a direct link relationship between a first station (STA) affiliated with the first device and a second STA affiliated with the a second device; and
performing frame transmission by using an enhanced multi-link operation between a the first STA affiliated with the first device and a the second STA affiliated with the second device according to the direct link relationship;
where the second STA affiliated with the second device receives the a sixth frame, and the sixth frame is sent by the first STA affiliated with the first device in the a form of a single-link single-spatial stream.

The embodiments of the present application provide a first device, which includes:
a first transmitting unit, configured to perform frame transmission between the first device and the a second device by using an enhanced multi-link operation, when in a case of establishing direct link with the second device working on the a same link;
where at least one of the first device and the second device is: a device supporting the enhanced multi-link operation or a device working in the enhanced multi-link operation.

The embodiments of the present application provide a second device, which includes:
a first switching unit, configured to perform mode switching of the enhanced multi-link operation with the first device for performing any of the above devices, after interacting with the first device for first capability information.

The embodiments of the present application provide a first device, which includes:
a first communication unit, configured to establish a direct link relationship between a first STA affiliated with the first device and a second STA affiliated with the a second device; and
a sixth transmitting unit, configured to perform frame transmission by using an enhanced multi-link operation between the first STA affiliated with the first device and the second STA affiliated with the second device according to the direct link relationship;
where the first STA affiliated with the first device sends a sixth frame to the second STA affiliated with the second device in a form of a single-link single-spatial stream.

The embodiments of the present application provide a second device, which includes:
a second communication unit, configured to establish a direct link relationship between a first STA affiliated with the a first device and a second STA affiliated with the second device; and
a seventh transmitting unit, configured to perform frame transmission by using an enhanced multi-link operation between a the first STA affiliated with the first device and a the second STA affiliated with the second device according to the direct link relationship;
where the second STA affiliated with the second device receives the a sixth frame, and the sixth frame is sent by the first STA affiliated with the first device in the a form of a single-link single-spatial stream.

The embodiments of the present application provide a chip, configured to implement the above communication methods.

Specifically, the chip includes: a processor, configured to call a computer program from a memory and run the computer program, to enable a device installed with the chip to perform the above communication methods.

The embodiments of the present application provide a computer-readable storage medium for storing a computer program, and the computer program, when being run by a device, enables the device to perform the above communication methods.

The embodiments of the present application provide a computer program product, which includes a computer program instruction enabling a computer to perform the above communication methods.

The embodiments of the present application provide a computer program, and the computer program, when being run by a computer, enables the computer to perform the above communication methods.

In the embodiments of the present application, in a case where a first device establishes direct link with a second device working on a same link, frame transmission is performed between the first device and the second device by using an enhanced multi-link operation, so that the enhanced multi-link operation may be effectively used in the direct transmission.

### BRIEF DESCRIPTION OF THE DRAWINGS

FIG. 1 is a schematic diagram of an application scenario in accordance with embodiments of the present application.
FIG. 2 is a schematic diagram of an interaction process of a triggered TXOP sharing mechanism in accordance with embodiments of the present application.
FIG. 3 is a schematic diagram of data transmission between concurrent dual-radio STA and AP in accordance with embodiments of the present application.
FIG. 4 is a schematic diagram of another data transmission between concurrent dual-radio STA and AP in accordance with embodiments of the present application.
FIG. 5 is a schematic diagram of data transmission in an enhanced multi-link single radio operation in accordance with embodiments of the present application.
FIG. 6 is a schematic structural diagram of a basic multi-link element in accordance with embodiments of the present application.
FIG. 7 is a schematic structural diagram of an EML capability subfield in accordance with embodiments of the present application.
FIG. 8 is a schematic structural diagram of an EML control field in accordance with embodiments of the present application.
FIG. 9 is a schematic flowchart of a communication method 900 in accordance with an embodiment of the present application.
FIG. 10 is a schematic flowchart of a communication method 1000 in accordance with an embodiment of the present application.
FIG. 11 is a schematic flowchart of a communication method 1100 in accordance with an embodiment of the present application.
FIG. 12 is a schematic flowchart of a communication method 1200 in accordance with an embodiment of the present application.
FIG. 13 is a schematic diagram of an interaction scenario taking two links as an example in accordance with an embodiment of the present application.
FIG. 14 is a schematic diagram of another interaction scenario taking two links as an example in accordance with an embodiment of the present application.
FIG. 15 is a schematic structural diagram of a P2P variant multi-link element of an enhanced multi-link capability subfield in accordance with an embodiment of the present application.
FIG. 16 is a schematic diagram of an enhanced multi-link capability information exchange in accordance with an embodiment of the present application.
FIG. 17 is a schematic diagram of another enhanced multi-link capability information exchange in accordance with an embodiment of the present application.
FIG. 18 is a schematic diagram of yet another enhanced multi-link capability information exchange in accordance with an embodiment of the present application.
FIG. 19 is a schematic diagram of still another enhanced multi-link capability information exchange, in accordance with an embodiment of the present application.
FIG. 20 is a schematic structural diagram of a control field of a multi-link element in accordance with an embodiment of the present application.
FIG. 21 is a schematic structural diagram of a P2P variant multi-link element in accordance with an embodiment of the present application.
FIG. 22 is an interactive schematic diagram of an EML operation mode notification in accordance with an embodiment of the present application.
FIG. 23 is an interactive schematic diagram of another EML operation mode notification in accordance with an embodiment of the present application.
FIG. 24 is a schematic structural diagram of a MLD EML OM Info list in accordance with an embodiment of this application.
FIGS. 25 to 27 are schematic structural diagrams of a MLD Info in accordance with an embodiment of the present application.
FIG. 28 is an interactive schematic diagram of yet another EML operation mode notification in accordance with an embodiment of the present application.
FIG. 29 is an interactive schematic diagram of still another EML operation mode notification in accordance with an embodiment of the present application.
FIG. 30 is a schematic structural diagram of a Peer MLD EML OM Info list in accordance with an embodiment of the present application.
FIG. 31 is an interactive schematic diagram of yet still another EML operation mode notification, in accordance with an embodiment of the present application.
FIG. 32 is an interactive schematic diagram of yet still another EML operation mode notification, in accordance with an embodiment of the present application.
FIG. 33 is an interactive schematic diagram of an EML link switching in accordance with an embodiment of the present application.
FIG. 34 is a schematic structural diagram of a trigger frame in accordance with an embodiment of the present application.
FIG. 35 is a schematic structural diagram of an EHT variant-trigger frame common information field in accordance with an embodiment of the present application.
FIG. 36 is a schematic structural diagram of a HE MU-RTS TXS user information field in accordance with an embodiment of the present application.
FIG. 37 is a schematic structural diagram of an EHT MU-RTS TXS user information field in accordance with an embodiment of the present application.
FIG. 38 is a schematic diagram of a process for identifying a P2P receiver by using Allocation Duration in User Info in accordance with an embodiment of the present application.
FIG. 39 is a schematic diagram of a Common Info field of a trigger frame of a newly defined EHT variant in accordance with an embodiment of the present application.
FIG. 40 is a schematic diagram of a process for identifying a P2P receiver by using a newly defined field in User Info in accordance with an embodiment of the present application.
FIG. 41 is a schematic diagram of a process for allocating multiple TXOPs at one time based on an OPT1 method in accordance with an embodiment of the present application.
FIG. 42 is a schematic diagram of a process for allocating multiple TXOPs at one time based on an OPT2 method in accordance with an embodiment of the present application.
FIG. 43 is an interactive schematic diagram of another EML link switching in accordance with an embodiment of the present application.
FIG. 44 is a schematic structural diagram of a Common Info of a MU-RTS frame of an EML variant in accordance with an embodiment of the present application.
FIG. 45 is an interactive schematic diagram of yet another EML link switching in accordance with an embodiment of the present application.
FIG. 46 is a schematic structural diagram of a first device 4600 in accordance with an embodiment of the present application.
FIG. 47 is a schematic structural diagram of a second device 4700 in accordance with an embodiment of the present application.
FIG. 48 is a schematic structural diagram of a first device 4800 in accordance with an embodiment of the present application.
FIG. 49 is a schematic structural diagram of a second device 4900 in accordance with an embodiment of the present application.
FIG. 50 is a schematic block diagram of a communication device in accordance with embodiments of the present application.
FIG. 51 is a schematic block diagram of a chip in accordance with embodiments of the present application.
FIG. 52 is a schematic block diagram of a communication system in accordance with embodiments of the present application.

### DETAILED DESCRIPTION

Technical solutions of the embodiments of the present application will be described below, in conjunction with the drawings of the embodiments of the present application.

The technical solutions of the embodiments of the present application may be applied to various communication systems, such as a wireless local area network (WLAN), wireless fidelity (Wi-Fi) or other communication systems.

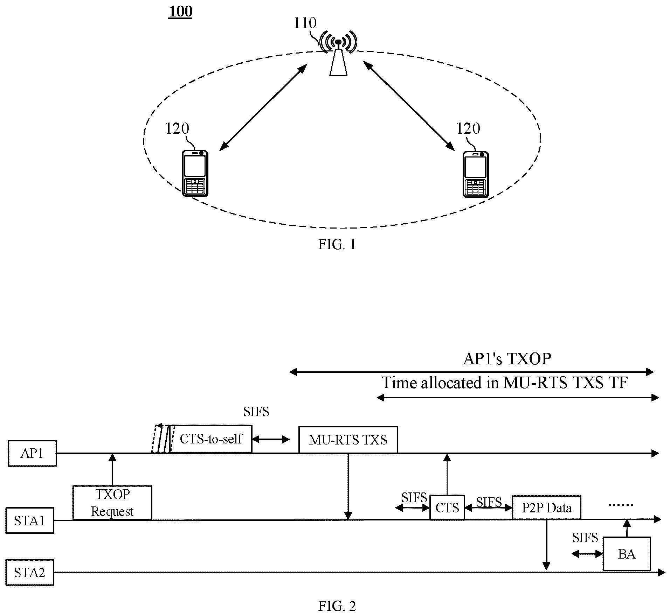

Exemplary, a communication system 100 to which the embodiments of the present application are applied is shown in FIG. 1. The communication system 100 may include an access point (AP) 110 and a station (STA) 120 accessing a network through the access point 110.

In some scenarios, an AP is referred to as an AP STA. That is, in a sense, the AP is also a STA.

In some scenarios, a STA is also referred to as a non-AP STA.

Communication in the communication system 100 may be communication between an AP and a non-AP STA, communication between a non-AP STA and another non-AP STA, or communication between a STA and a peer STA, where a peer STA may refer to a device that communicates with a peer end of the STA, for example, a peer STA may be an AP or a non-AP STA.

The AP is equivalent to a bridge connecting wired network and wireless network, and its main function is to connect various wireless network clients together and then connect the wireless network to Ethernet. An AP device may be a terminal device (e.g., a mobile phone) or a network device (e.g., a router). The terminal device or network device has a chip for implementing a communication function, e.g., WLAN or Wi-Fi chip.

It can be understood that the role of the STA in the communication system is not fixed. For example, in some scenarios, when a mobile phone is connected to a router, the mobile phone is a non-AP STA; and the mobile phone serves as a hotspot for other mobile phones, the mobile phone plays the role of an AP.

The AP and non-AP STA may be devices applied in internet of vehicles, internet of things (IoT) nodes and sensors in the IoT, smart cameras, smart remote controls, and smart water and electricity meters in smart homes, and sensors in smart cities.

In some embodiments, the non-AP STA can support the 802.11be standard. The non-AP STA can also support various current and future 802.11 family wireless local area networks (WLAN) standards such as 802.11ax, 802.11ac, 802.11n, 802.11g, 802.11b, and 802.11a.

In some embodiments, the AP may be a device supporting the 802.11be standard. The AP may also be a device supporting various current and future 802.11 family WLAN standards, such as 802.11ax, 802.11ac, 802.11n, 802.11g, 802.11b, and 802.11a.

In the embodiments of the present application, the STA may be a device supporting the WLAN/Wi-Fi technology, such as a mobile phone, a pad, a computer, a virtual reality (VR) device, an augmented reality (AR) device, a wireless device in industrial control, a set-top box, a wireless device in self driving, an in-vehicle communication device, a wireless device in remote medical, a wireless device in smart grid, a wireless device in transportation safety, a wireless device in smart city, a wireless device in smart home, a wireless communication chip/ASIC/SoC, or the like.

Frequency bands supportable by WLAN technology may include but are not limited to: low frequency bands (e.g., 2.4 GHz, 5 GHz, and 6 GHz) and high frequency bands (e.g., 45 GHz, and 60 GHz).

FIG. 1 exemplarily shows one AP STA and two non-AP STAs. Optionally, the communication system 100 may include multiple AP STAs and another number of non-AP STAs, which are not limited in the embodiments of the present application.

It can be understood that terms "system" and "network" are often used interchangeably herein. The term "and/or" herein is only an association relationship to describe associated objects, indicating that there may be three relationships. For example, "A and/or B" may include: A alone, both A and B, and B alone. In addition, the character "/" herein generally indicates that related objects before and after this character are in an "or" relationship.

It can be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

The term "correspond" mentioned in the embodiments of the present application may mean a direct or indirect relationship between two, or a relationship of association between the two, or a relationship of indicating and being indicated, or configuring and being configured, or the like.

To facilitate understanding of the technical solutions of the embodiments of the present application, the related technologies of the embodiments of the present application are described below. The following related technologies, as optional solutions, may be arbitrarily combined with the technical solutions of the embodiments of the present application, and those combined solutions all fall within the protection scope of the embodiments of the present application.

WLAN is widely used in enterprises, homes and other scenarios due to its low cost, flexibility and easy extension. WLAN-related standardization organizations and manufacturers have designed and promoted various peer-to-peer (P2P) communication technologies applied in Wi-Fi networks, such as Wi-Fi Direct and Tunneled direct-link setup (TDLS), enabling Wi-Fi devices to bypass an access point (AP) and perform direct peer-to-peer communication, thereby reducing the occupation of wireless resources during communication and reducing channel overhead.

Compared with a station (STA) device directly obtaining an transmission opportunity (TXOP) through competition and performing P2P transmission, if an AP device is required to assist the STA in competing for the channel to perform P2P transmission, since the AP device has a higher probability of successfully obtaining the channel access right, it may make the P2P transmission more timely and it is also more conducive to the AP device to manage wireless mediums (WM) within its basic service set (BSS). Therefore, a triggered transmission opportunity (triggered TXOP) sharing mechanism implemented by using a multiple users-request to send TXOP Sharing (MU-RTS TXS) trigger frame is designed to support P2P transmission with the assistance of AP.

For the multi-link operation characteristics, a multi-link device (MLD) is also defined accordingly. The MLD can support multi-band communication and can use different channel resources on a same or different frequency bands for communication at the same time. These different channel resources are called links or wireless medium links. For example, the MLD uses a 20 MHz channel on the 2.4 GHz band, an 80 MHz channel on the 5 GHz band, and a 160 MHz channel on the 6 GHz band at the same time, and the MLD can be said to have (or operate) three links.

Considering the complexity and cost of implementation, a non-AP MLD is allowed to be a single radio multi-link device (Single Radio MLD). Specifically, although the Single Radio MLD can work on multiple links, it can only send or receive frames on one link at a time. Allows the Single Radio MLD to work in a multi-link single radio (MLSR) operation mode. From the perspective of an AP MLD, this non-AP MLD is active on only one link at a time and is dormant on other links.

For an enhanced multi-link operation, a device using the enhanced multi-link operation does not need to have multi-spatial stream transmission capability on each link it operates. Instead, the device can switch available space streams on other links to a specified link after listening to a specific frame, so as to realize the multi-spatial stream transmission on the specified link.

Further, enhanced multi-link operations are divided into enhanced multi-link single radio (EMLSR) operations and enhanced multi-link multiple radio (EMLMR) operations. The EMLSR operation may be applied to a Single Radio MLD with multiple available spatial streams (including send links and/or receive links). Specifically, the Single Radio MLD in an EMLSR mode performs listening on multiple links at the same time, and when there is data needed to be received or sent, spatial streams used for listening on other links are switched to the specified link and received or sent in a form of multi-spatial streams. The EMLSR may enable the Single Radio MLD to obtain more channel access opportunities, thereby improving throughput and delay (latency) performance of the Single Radio MLD.

As shown in FIG. 2, STA1, as a P2P initiator, first informs an AP that it has P2P transmission requirements. Then, after the AP successfully accesses and obtains the TXOP, it may share part of the TXOP with STA1 by sending a MU-RTS TXS frame. After STA1 receives the MU-RTS TXS frame, if its own conditions permit, it will feedback clear to send (CTS) to the AP, and then it may perform P2P or uplink transmission using an allocated time.

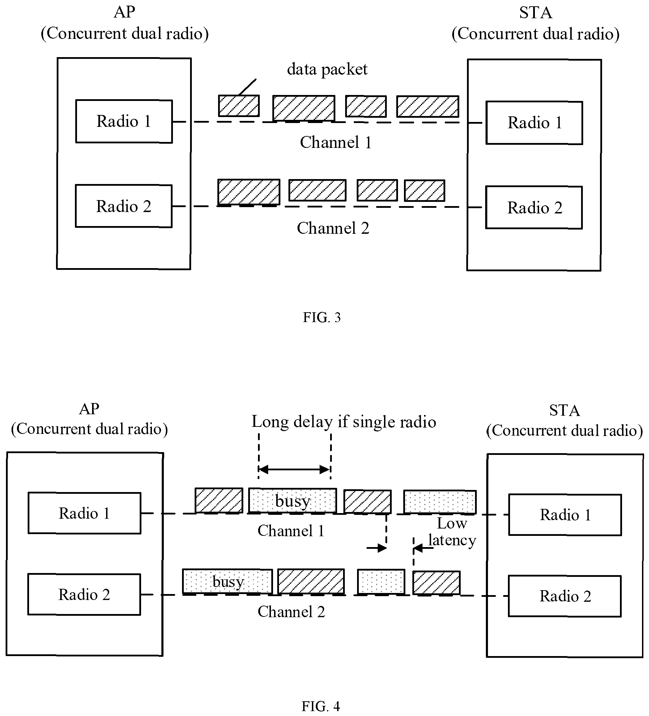

FIG. 3 illustrates a situation of data transmission between concurrent dual radio STA and AP in an ideal situation, where both a channel 1 and a channel 2 can be used for the data transmission. In this case, the channel 1 and the channel 2 are idle and there is no overlapping condition in the data transmission. As the network becomes busy, as shown in FIG. 4, the channel 1 and the channel 2 are busy, and the data transmission between the channel 1 and the channel 2 presents an overlapping condition, which is actually equivalent to an operation of a single link, that is, the STA can only transmit data on one link at a time.

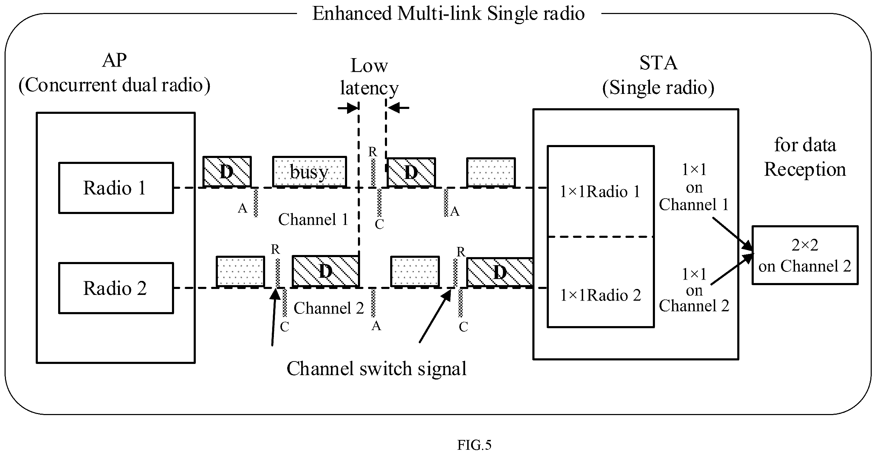

For the scenario shown in FIG. 4, an enhanced multi-link single radio (EMLSR) operation is proposed for single radio devices (only sending or receiving data on one link at a time). As shown in FIG. 5, a single radio non-AP MLD, i.e., a STA, configures its 2x2 transmission module as 1×1 on the channel 1 and the channel 2 respectively, to perform listening on both channels at the same time. Before transmitting downlink data on an idle channel, the AP MLD first sends a control frame (e.g., an RTS frame or a MU-RTS frame). After receiving the control frame, the non-AP MLD replies with a CTS frame and simultaneously switches to 2x2 on a link that received the initial control frame to perform data reception.

It can be noted that the non-AP MLD switches from a 1×1 listening mode of each link to a 2x2 transmission mode on a certain link to perform spatial reuse. An antenna of a device has an NxN capability, which means that this device has N spatial streams. The switching from the 1×1 listening mode of each link to the 2x2 transmission mode on a certain link means that one spatial stream on one link is switched to another link, enabling the latter to perform data reception using two spatial streams.

For listening operations of EMLSR operations, a non-AP MLD may work in an EMLSR mode on a specific subset of a set of enabled links, and links in this subset are called EMLSR links. The non-AP MLD may listen to an EMLSR link by having an affiliated STA working on the EMLSR link in an awake state.

In a case where EMLSR link switching is required to be performed, an operation state switches from a listening operation state to a single-link multi-spatial stream frame exchange operation state.

For single-link multi-spatial stream frame exchange operations, an AP affiliated with an AP MLD that is to initialize frame exchange with a non-AP MLD on one of the EMLSR links must transmit an initial control frame to the non-AP MLD to enable frame exchange. The initial control frame must be a MU-RTS trigger frame or a buffer status report poll (BSRP) trigger frame. For a non-AP MLD in an EMLSR mode, MU-RTS and BSRP trigger frames must be received. Upon receipt of an initial control frame for a frame exchange sequence and transmission of an immediate response to this initial control frame, the non-AP MLD must be capable of sending or receiving frames on a link on which the initial control frame is received and must not transmit or receive them on other EMLSR links until the end of the frame exchange sequence, and subjecting to its spatial streaming capabilities, operation mode, and link switching delay, the non-AP MLD should be capable of receiving physical layer protocol data units (PPDU) sent using multi-spatial streams one short interframe space (SIFS) after the end of transmission of the response frame requested by the initial control frame. During the frame exchange sequence, the AP MLD shall not send frames to the non-AP MLD on other EMLSR links. At the end of the frame exchange sequence, the non-AP MLD switches back to the listening operation on an enabled link according to certain rules.

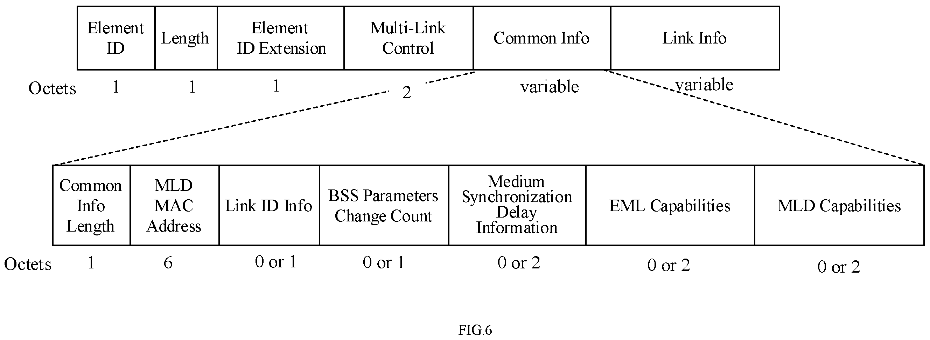

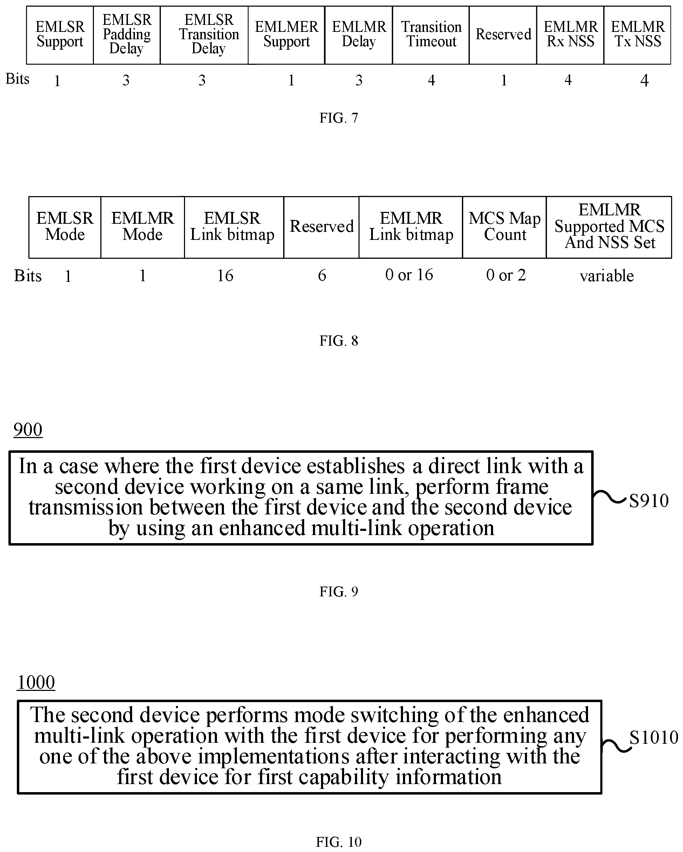

EML capability information (EML Capabilities) is carried in common information (Common Info) of a basic multi-link element, as shown in FIG. 6. The design of the enhanced multi-link capability subfield is shown in FIG. 7. Frames carrying basic multi-link (ML) elements may be used for EML capability information exchange, such as beacon frames, probe response frames, association request frames, and association response frames. It is generally assumed that this interaction of the capability information is performed during association (multi-link setup).

After the interaction of the capability information, the EMLSR mode is in the closed state by default. Some mechanisms are needed to inform the other party to turn on the EMLSR mode, and the other party needs to confirm the notification. The notification function of the working mode is realized through an EML operation mode notification (OMN) frame. The EML OMN frame includes the structure of an EML Control field, as shown in FIG. 8.

If the non-AP MLD changes its EML operation mode, e.g., turning on the EMLSR mode, it sends an EML OMN frame with EMLSR Mode=1 in the EML Control field to the AP MLD. After receiving this frame, the AP MLD may choose to use an EML OMN frame with the same field settings to provide feedback to the EML OMN frame sent by the non-AP MLD. Upon receipt of the feedback, the non-AP MLD may immediately perform and complete switching of the EML operation mode. Otherwise, if the non-AP MLD has not been receiving the EML OMN frame fed back by the AP MLD, it must wait for a transmission timeout negotiated during the capability interaction before it can perform switching of the EML operation mode.

In summary, the enhanced multi-link operation may temporarily switch available spatial streams (including send links and/or receive links) to send or receive frames through spatial reuse, thereby increasing the communication capacity of a single link. However, this mechanism cannot currently be effectively used in direct transmission, e.g., P2P transmission. In one respect, the standard lacks a detailed description of the application of this mechanism to P2P transmission, and only specifies the uplink or downlink transmission for non-AP MLD and AP MLD, but does not describe the situation of P2P transmission. In another respect, due to the switching of the available spatial streams (including send links and/or receive links), some links will be unavailable in a time period of the switching, and a peer device of the P2P may initiate transmission without knowing this situation, which will lead to a waste of channel resources.

The present application combines a triggered transmission opportunity sharing mechanism with enhanced multi-link operation, and proposes a method for effectively applying the enhanced multi-link operation to P2P communications.

FIG. 9 is a schematic flowchart of a communication method 900 in accordance with an embodiment of the present application. The method may optionally be applied to the system shown in FIG. 1, but is not limited thereto. The method includes at least part of the following content:
S910, in a case where a first device establishes direct link with a second device working on a same link, performing frame transmission between the first device and the second device by using an enhanced multi-link operation.

Here, at least one of the first device and the second device is: a device supporting the enhanced multi-link operation or a device working in the enhanced multi-link operation.

In some examples, the direct link includes: P2P communication, end-to-end communication, etc.

In some examples, the first device may be non-AP Device 1. Optionally, the non-AP Device 1 may provide services to a non-AP MLD (e.g., non-AP MLD2) working in an EMLSR mode. Non-AP Device 1 itself may also use the EMLSR mode, that is, non-AP Device 1, serving as non-AP MLD 1, performs P2P interaction with a peer P2P device (e.g., non-AP MLD2).

In some examples, the second device may be: a peer P2P device (e.g., non-AP MLD2) performing P2P communication with the first device.

By using the embodiments of the present application, in a case where the first device establishes the direct link with the second device working on the same link, the frame transmission is performed between the first device and the second device by using the enhanced multi-link operation, so that the enhanced multi-link operation may be effectively used in the direct transmission (e.g., P2P transmission).

In an implementation, the method further includes: applying, by the first device, for a TXOP from a third device. The third device is configured to share the TXOP with the first device and the second device for the direct link, and to uniformly schedule the frame transmission between the first device and the second device within a TXOP sharing time.

In some examples, the third device may be an AP MLD. The first device, serving as an initiator of P2P transmission, applies for a TXOP from the AP MLD. The AP MLD may share the TXOP, use the TXOP sharing time for the P2P transmission, and uniformly schedule the P2P transmission within its BSS.

In an implementation, performing the frame transmission between the first device and the second device by using the enhanced multi-link operation, includes: in a case where the enhanced multi-link operation is an EMLSR operation, performing, by the first device, frame exchange of single-link multi-spatial streams with the second device on one link of multiple links that the second device has.

In some examples, the multiple links include: multiple EMLSR links. In addition, if applied to an EMLMR scenario, the multiple links may also include: multiple EMLMR links.

In an implementation, the first device is configured to provide services to the second device working in an EMLSR mode; and the second device is configured to support the EMLSR operation and work in the EMLSR mode.

In some examples, at least one of the first device and the second device may use the EMLSR mode. The first device may provide service capabilities only to the other end, and only the second device may use the EMLSR mode. For example, the first device may be non-AP Device1, and non-AP Device1 may provide services only to a non-AP MLD (e.g., non-AP MLD2) working in the EMLSR mode; and the second device may be: a peer P2P device (e.g., non-AP MLD2) performing P2P communication with the first device, and only non-AP MLD2 works in the EMLSR mode.

In an implementation, the first device is configured to provide services to the second device working in the EMLSR mode, and/or support the EMLSR operation and work in the EMLSR mode; and the second device is configured to provide services to the first device working in the EMLSR mode, and/or support the EMLSR operation and work in the EMLSR mode.

In some examples, either the first device or the second device may use the EMLSR mode and both may provide service capabilities to the peer device. For example, the first device may be non-AP Device 1, and non-AP Device 1may provide services to a non-AP MLD (e.g., non-AP MLD2) working in the EMLSR mode. Non-AP Device 1 itself may also use the EMLSR mode, that is, non-AP Device 1, serving as non-AP MLD1, performs P2P interaction with a peer P2P device (e.g., non-AP MLD2). The second device may be: a peer P2P device (e.g., non-AP MLD2) performing P2P communication with the first device. Similarly, non-AP MLD2 itself may use the EMLSR mode, and may also provide services to the peer P2P device (e.g., non-AP MLD1).

In an implementation, the method further includes: performing, by the first device, interaction of first capability information when establishing the direct link with the second device, where the first capability is a capability to support the EMLSR operation and capable of providing services to a device working in the EMLSR mode, or a capability to work in the EMLSR mode. Optionally, in the EMLSR scenario, only after the interaction of the first capability information is performed, the EMLSR mode can be switched (e.g., switching from the default closed state of the EMLSR mode to the open state, or switching from the open state to the closed state) and the EMLSR link can be switched (from the listening operation state to the single-link multi-spatial stream frame exchange operation state).

In an implementation, the first capability information is carried in a multi-link element. The first capability information may be EML capability information, and the EML capability information may be carried in the multi-link element when establishing a P2P relationship. In other words, the establishment of the P2P relationship may be accompanied by the interaction of the EML capability information.

In some examples, the multi-link element includes at least one of the following methods.
1) Mode 1: in a case where the multi-link element is a basic multi-link element, the first capability information is carried in the common information field in the basic multi-link element; where subfields of the first capability information include: a first subfield for indicating the EMLSR mode, and a second subfield for indicating support for an EMLSR operation in the direct link. For example, in the subfields of the first capability information (e.g., the EML capability information), the first subfield is an "EMLSR Support" subfield, and the reserved second subfield is a "P2P Support" subfield.
2) Mode 2: in a case where the multi-link element is a P2P variant multi-link element, the first capability information is carried in a common information field in the P2P variant multi-link element; where the P2P variant multi-link element further includes: a multi-link control field carrying a third subfield, the third subfield is used to indicate a type of the multi-link element. For example, in the subfield of the first capability information (e.g., the EML capability information), the third subfield is a "Type" subfield.

For example, taking the first capability information as the EML capability information, the interaction of the EML capability information includes at least various hardware entity interaction scenarios such as interaction between a non-AP MLD and an AP MLD, interaction between a non-AP MLD and another non-AP MLD, and interaction between a non-AP MLD and an extremely high throughput (EHT) non-AP STA.

In some examples, the first device (e.g., a non-AP MLD1) sends a first frame (e.g., an association request frame) to the third device (e.g., an AP MLD); where the first frame carries the subfields of the first capability information (e.g., the EML capability information), to enable the third device to be informed that the first device supports the EMLSR operation and to be capable of providing services to the second device working in the EMLSR mode.

In some examples, the first device (e.g., a non-AP MLD1) sends a first frame (e.g., an association request frame) to the second device (e.g., non-AP MLD2); where the first frame carries the subfields of the first capability information (e.g., the EML capability information), to enable the second device to be informed that the first device supports the EMLSR operation and to be capable of providing services to the second device working in the EMLSR mode.

In some examples, the first device (e.g., non-AP MLD1) receives a first response frame (e.g., an association response frame) fed back by the second device (e.g., non-AP MLD2), and the first response frame carries the subfields of the first capability information (e.g., the EML capability information).

In an implementation, the first device provides services to at least one device working in the EMLSR mode, and/or works in the EMLSR mode after notifying that the EMLSR mode is enabled.

In some examples, the first device may be non-AP Device1. Optionally, non-AP Device1 may provide services to a non-AP MLD (e.g., non-AP MLD2) working in the EMLSR mode. Non-AP Device1 itself may also use the EMLSR mode, that is, non-AP Device1, serving as non-AP MLD1, performs P2P interaction with a peer P2P device (e.g., non-AP MLD2). After the EMLSR mode is enabled, non-AP Device1 may also work in the EMLSR mode.

FIG. 10 is a schematic flowchart of a communication method 1000 in accordance with an embodiment of the present application. The method may optionally be applied to the system shown in FIG. 1, but is not limited thereto. The method includes at least part of the following content:
S1010, performing, by the second device, mode switching of the enhanced multi-link operation with the first device for performing any one of the above implementations after interacting with the first device for first capability information.

In an implementation, the second device is used to support mode switching of the enhanced multi-link operation, where the enhanced multi-link operation is an EMLSR operation.

In some examples, the second device may perform the mode switching of the enhanced multi-link operation through an operation mode notification after interacting with the first device for the first capability information (e.g., the EML capability information). Among multiple devices of P2P transmission, as long as they can work in the EMLSR mode after the EMLSR mode is turned on, they can each serve as the second device. For example, the first device is non-AP MLD1, and the second device is non-AP MLD2. After interacting the EML capability information, non-AP MLD2 implements the switching of the EMLSR mode through the operation mode notification. Optionally, in a case where non-AP MLD1 also supports the EMLSR mode switching, non-AP MLD1 may also implement the EMLSR mode switching through the operation mode notification.

In an implementation, performing the mode switching of the enhanced multi-link operation, includes: in a case of needing to switch the EMLSR mode, sending, by the second device (e.g., non-AP MLD2), a second frame (e.g., an EML OMN frame) to the first device (non-AP MLD1), the second frame carrying a control field to notify the switching of the EMLSR mode; where the control field includes a subfield (e.g., operation mode information) of the EMLSR mode. In a case of receiving a second response frame fed back by the first device, the second device completes the switching of the EMLSR mode, thereby directly notifying the change of the EMLSR mode between peer devices (non-AP MLD2 and non-AP MLD1) using the existing mechanism.

In an implementation, performing the mode switching of the enhanced multi-link operation, includes: in a case of needing to switch the EMLSR mode, sending, by the second device (e.g., non-AP MLD2), a second frame (e.g., an EML OMN frame) to the third device (e.g., an AP MLD), the second frame carrying a control field (e.g., operation mode information) to notify the switching of the EMLSR mode; where the control field includes a subfield of the EMLSR mode. In a case of receiving a second response frame fed back by the third device, the second device completes the switching of the EMLSR mode, so that after receiving the second frame, the AP MLD may actively notify the change of the EMLSR mode to a peer device (the peer device of non-AP MLD2 is non-AP MLD1).

In some examples, the third device (e.g., an AP MLD) is configured to notify switching information by using a third frame (e.g., a peer MLD EML operation mode advertising frame) at a first time to other devices associated with the third device and supporting the direct link with the second device.

In some examples, the first time is any time after the mode switching of the EMLSR is completed and before a sharing of a TXOP is triggered to perform the direct link.

In an implementation, the method further includes: in a case of needing to switch to an EMLSR mode, sending, by the second device (e.g., non-AP MLD2), a fourth frame (e.g., a peer MLD EML operation mode request frame) to the third device (e.g., an AP MLD) to request the third device to notify an EML operation mode of other devices performing the direct link with the second device. Here, the third device is configured to notify switching information by using a third frame (e.g., a peer MLD EML operation mode advertising frame) to other devices associated with the third device and supporting the direct link with the second device after responding to a request, so that after receiving the fourth frame, the AP MLD may passively notify the change of the EMLSR mode to a peer device (the peer device of non-AP MLD2 is non-AP MLD 1).

In an implementation, the third frame carries first information; where the first information includes: a fourth subfield for indicating identity information corresponding to a device with peer EML capability, and a fifth subfield for indicating an EMLSR mode corresponding to the device with peer EML capability.

In some examples, the third frame may be a peer MLD EML operation mode advertising frame; the first information may be a Peer MLD EML OM Info list; the fourth subfield may be an MLD Info subfield (specifically used to indicate identity information of a certain MLD); and the fifth subfield may be an EML Control field (specifically used to indicate an EML operation mode corresponding to a non-AP MLD in the Peer MLD EML OM Info list).

In some examples, the identity information corresponding to the device with peer EML capability includes: a medium access control (MAC) address and/or an association identifier (AID) assigned when associated with the third device.

In an implementation, the fourth frame is: a frame of a different type from the third frame. In other words, the fourth frame is a peer MLD EML operation mode request frame, and the third frame is a peer MLD EML operation mode advertising frame; where the fourth frame carries a field for indicating that a current frame belongs to a request frame of a device with peer EML capability. In this case, the fourth frame is only the peer MLD EML operation mode request frame.

In an implementation, alternatively, the fourth frame may be a frame of the same type as the third frame. In other words, the fourth frame may be used either as a peer MLD EML operation mode request frame or as a peer MLD EML operation mode advertising frame through an indication field. Here, the fourth frame carries a field for indicating that a current frame belongs to a request frame or an advertising frame of a device with peer EML capability. In this case, the fourth frame may be used as the peer MLD EML operation mode request frame or the peer MLD EML operation mode advertising frame depending on the different indication fields.

In an implementation, the fourth frame includes: a first value and first information.

In some examples, the first value is used to identify interaction of current EML capability information. For example, the first value may be a value of a Dialog Token field. The value of the Dialog Token field is set as a "non-zero value" to identify this interaction.

In some examples, the first information includes: a fourth subfield for indicating identity information corresponding to a device with peer EML capability, and a fifth subfield for indicating an EMLSR mode corresponding to the device with peer EML capability.

In some examples, the first information may be a Peer MLD EML OM Info list; the fourth subfield may be an MLD Info subfield (specifically used to indicate identity information of a certain MLD); and the fifth subfield may be an EML Control field (specifically used to indicate an EML operation mode corresponding to a non-AP MLD in the Peer MLD EML OM Info list).

In some examples, the corresponding identity information of the device with peer EML capability includes: a MAC address, and/or an AID assigned when associated with the third device.

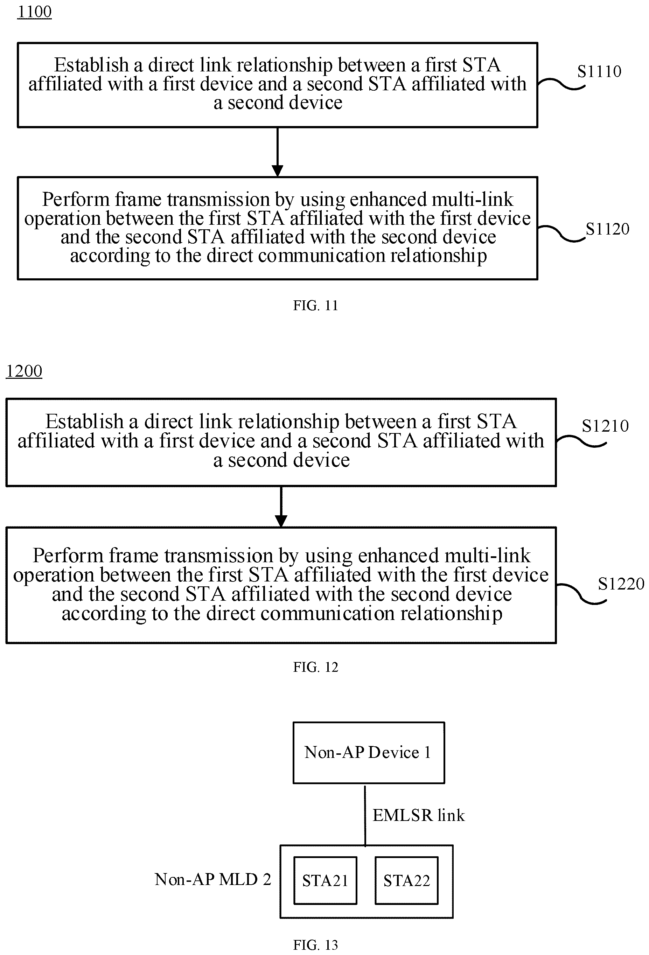

FIG. 11 is a schematic flowchart of a communication method 1100 in accordance with an embodiment of the present application. The method may optionally be applied to the system shown in FIG. 1, but is not limited thereto. The method includes at least part of the following content:
S1110, establishing a direct link relationship between a first station (STA) affiliated with a first device and a second STA affiliated with a second device; and
S1120: performing frame transmission by using enhanced multi-link operation between the first STA affiliated with the first device and the second STA affiliated with the second device according to the direct link relationship.

In some examples, the first STA (STA11) affiliated with the first device (e.g., non-AP MLD1) sends a sixth frame to the second STA (STA21) affiliated with the second device (such as non-AP MLD2) in a form of a single link single-spatial stream.

In some examples, the first STA affiliated with the first device (e.g., non-AP MLD1) and the second STA affiliated with the second device (e.g., non-AP MLD2) work on a same link.

The first STA affiliated with the first device may be STA11, and the second STA affiliated with the second device may be STA21. The STA11 sends the sixth frame (e.g., a MU-RTS) to STA21 in the form of the single-link single-spatial stream.

In the following description, the first device (e.g., non-AP MLD1), the second device (e.g., non-AP MLD2), the first STA affiliated with the first device (e.g., STA11), the second STA affiliated with the second device (e.g., STA21), the third device (e.g., an AP MLD), the fifth frame which may be a trigger frame (e.g., a MU-RTS TXS frame), the sixth frame which may be an initial control frame (e.g., a MU-RTS), and the feedback frame which may be a CTS, are described as examples, which will not be described in detail.

It will be noted that the fifth frame and the sixth frame are both control frames, and the fifth frame, serving as a trigger frame, is actually also a type of control frame. The CTS may be used as a feedback frame of the fifth frame or a feedback frame of the sixth frame. The feedback frame in the present application is exemplified by the CTS.

It will be noted that interactive information, such as the transmission and parsing of frames, specifically, is done by a STA affiliated with a device (e.g., performed by STA11 or STA21), while processing or action to complete an operation (e.g., link switching) is performed by the device itself. For example, if at least one of non-AP MLD1 and non-AP MLD2 works in the EMLSR mode, the link switching is performed by non-AP MLD1 or non-AP MLD2.

The P2P initiator is the first device, and an EMLSR operation scenario where an initial control frame is sent is as follows:
In an implementation, the method further includes: requesting, by the first STA affiliated with the first device, a required TXOP time from the third device; and receiving, by the first STA affiliated with the first device, the fifth frame sent by the third device, where the third device is configured to share the TXOP time with the first STA affiliated with the first device in TXOP sharing mode 2. Here, for TXOP sharing mode 2, a triggered TXOXP sharing mechanism has two working modes. TXOP sharing mode 1 allows only a non-AP STA that obtains the TXOP to perform uplink transmission by using the TXOP, while TXOP sharing mode 2, based on mode 1, further allows the non-AP STA to perform the P2P transmission with other peer non-AP STAs by using the TXOP.

In an implementation, the method further includes: enabling the first STA affiliated with the first device and the second STA affiliated with the second device both to receive the fifth frame on respective EMLSR link sets on which they work and to parse the fifth frame.

In an implementation, the method further includes: performing, by the first device, EMLSR link switching, while the first STA affiliated with the first device sends the sixth frame to the second STA affiliated with the second device.

In an implementation, the method further includes: performing, by the first device, EMLSR link switching within a time period in which the first STA affiliated with the first device receives the fifth frame and performs feedback to the fifth frame, and/or within a time period in which the first STA affiliated with the first device sends the sixth frame to the second STA affiliated with the second device and receives feedback of the sixth frame.

In an implementation, the sixth frame carries padding information, and the padding information satisfies at least one of the following conditions:
1) a switching delay requirement of the second device;
2) a switching delay requirement of the first device; and
3) a switching delay requirement between the second device and the first device.

The P2P initiator is the first device, and an EMLSR operation scenario where the initial control frame is sent to perform the EMLSR link switching is as follows.

In an implementation, the method further includes: requesting, by the first STA affiliated with the first device, a required TXOP time from the third device, and indicating, by the first STA affiliated with the first device, first identity information; where the first identity information is identity information of the second STA affiliated with the second device, and the second STA affiliated with the second device and the third device are associated with each other and interact with each other for EML capability information.

The P2P initiator is the first device, and an EMLSR operation scenario where the EMLSR link switching is indicated by using a MU-RTS TXS or a variant of the MU-RTS is as follows.

In an implementation, the method further includes: receiving, by the first STA affiliated with the first device, the fifth frame or a variant of the fifth frame sent by the third device, where the third device is configured to share the TXOP time with at least one of the first STA affiliated with the first device and the second STA affiliated with the second device in TXOP sharing mode 2.

In some examples, the fifth frame or the variant of the fifth frame is used to allocate a TXOP to at least one of the first STA affiliated with the first device and the second STA affiliated with the second device.

In some examples, the fifth frame or the variant of the fifth frame includes a user information list (User Info List) field; and the user information list field is used to request the required TXOP time from the third device.

In some examples, the user information list field includes: a first indication subfield for indicating a device, a second indication subfield for indicating roles of two parties in direct link, and a third indication subfield for indicating the TXOP time. For example, the first indication subfield may be an AID12 subfield, which is used to indicate AID information of the device that needs to process the frame; the roles of the two parties in the direct link refer to: whether a current device is the P2P initiator or the P2P responder; and the third indication subfield may be an Allocation Duration subfield, which is used to indicate the allocated TXOP duration.

In some examples, the third indication subfield is a second value, and the second value is used to indicate that a current device is a responder for performing the direct link with the first STA affiliated with the first device. For example, if Allocation Duration=0, it is used to indicate that the current device is a responder for performing P2P communication with the first STA affiliated with the first device.

In an implementation, the method further includes: determining the variant of the fifth frame based on values of a first reserved field in common information (Common Info) and a subfield of the first reserved field. For example, the reserved field in the common information may be: GI and HE/EHT-LTF type/Triggered TXOP Sharing Mode. Taking Triggered TXOP Sharing Mode as an example, the reserved field Triggered TXOP Sharing Mode is set to 2, and its subfield EML Triggered TXOP sharing mode subfield is set to 1. In this case, the current frame is the variant of the fifth frame, that is, a variant of a MU-RTS TXS, such as a MU-RTS ETXS.

In an implementation, the method further includes: enabling the first STA affiliated with the first device and the second STA affiliated with the second device both to receive the fifth frame on respective EMLSR link sets on which they work and to parse the fifth frame.

In an implementation, the method further includes: in a case where at least one of the first STA affiliated with the first device and the second STA affiliated with the second device receives the fifth frame or the variant of the fifth frame, performing, by at least one of the first device and the second device, the EMLSR link switching. In other words, in a case where the second STA affiliated with the second device receives the fifth frame or the variant of the fifth frame, the second device may perform the EMLSR link switching; or in a case where the first STA affiliated with the first device also supports the EMLSR, i.e., both work in the EMLSR, and in a case where the first STA affiliated with the first device receives the fifth frame or the variant of the fifth frame, the first device may also perform the EMLSR link switching, and both the first device and the second device may perform the EMLSR link switching.

The P2P initiator is the first device, and an EMLSR operation scenario where an AP MLD indicates the EMLSR link switching and triggered TXOP sharing in steps is as follows.

In one implementation, the method further includes: requesting, by the first STA affiliated with the first device, a required TXOP time from the third device, and indicating, by the first STA affiliated with the first device, first identity information; where the first identity information is identity information of the second STA affiliated with the second device, and the second STA affiliated with the second device and the third device are associated with each other and interact with each other for EML capability information.

In an implementation, the method further includes: receiving, by the first STA affiliated with the first device, the fifth frame sent by the third device, the third device being configured to share the TXOP time with at least one of the first STA affiliated with the first device and the second STA affiliated with the second device in TXOP sharing mode 2.

In an implementation, the method further includes: in a case where the second STA affiliated with the second device that receives the sixth frame completes link switching, continuing to hold a state of single-link multi-spatial streams until a second time is reached. Optionally, the second time may also be a time specified by a peer device (e.g., the first device) of the second device.

In an implementation, the second time is determined based on the fifth frame time sent at a lowest rate, a feedback time of the fifth frame, and a short interframe space (SIFS).

In an implementation, the method further includes: in a case where the fifth frame is sent to the second STA affiliated with the second device, triggering feedback of the fifth frame.

In an implementation, the method further includes: in a case where at least one of the first device and the second device completes the EMLSR link switching, performing frame exchange of single-link multi-spatial streams.

FIG. 12 is a schematic flowchart of a communication method 1200 in accordance with an embodiment of the present application. The method may optionally be applied to the system shown in FIG. 1, but is not limited thereto. The method includes at least part of the following content:
S1210, establishing a direct link relationship between a first STA affiliated with a first device and a second STA affiliated with a second device; and
S1220, performing frame transmission by using enhanced multi-link operation between the first STA affiliated with the first device and the second STA affiliated with the second device according to the direct link relationship.

Here, the second STA affiliated with the second device receives a sixth frame, and the sixth frame is sent by the first STA affiliated with the first device in a form of a single-link single-spatial stream.

In some examples, after the direct link relationship is established between the first STA (STA11) affiliated with the first device (e.g., non-AP MLD1) and the second STA (STA21) affiliated with the second device (e.g., non-AP MLD2), the frame transmission may be performed between the first STA affiliated with the first device and the second STA affiliated with the second device by using the enhanced multi-link operation.

In some examples, the first STA affiliated with the first device (e.g., non-AP MLD1) and the second STA affiliated with the second device (e.g., non-AP MLD2) work on a same link.

The first STA affiliated with the first device may be STA11, and the second STA affiliated with the second device may be STA21.

In the following description, the first device (e.g., non-AP MLD1), the second device (e.g., non-AP MLD2), the first STA affiliated with the first device (e.g., STA11), the second STA affiliated with the second device (e.g., STA21), the third device (e.g., an AP MLD), the fifth frame which may be a trigger frame (e.g., a MU-RTS TXS frame), the sixth frame which may be an initial control frame (e.g., a MU-RTS), and the feedback frame which may be a CTS, are described as examples, which will not be described in detail.

It will be noted that the fifth frame and the sixth frame are both control frames, and the fifth frame, serving as a trigger frame, is actually also a type of control frame. The CTS may be used as a feedback frame of the fifth frame or a feedback frame of the sixth frame. The feedback frame in the present application is exemplified by the CTS.

It will be noted that interactive information, such as the transmission and parsing of frames, specifically, is done by a STA affiliated with a device (e.g., performed by STA11 or STA21), while processing or action to complete an operation (e.g., link switching) is performed by the device itself. For example, if at least one of non-AP MLD1 and non-AP MLD2 works in the EMLSR mode, the link switching is performed by non-AP MLD1 or non-AP MLD2.

In an implementation, the method further includes: performing, by the second device, EMLSR link switching.

In an implementation, the method further includes: in a case of completing the EMLSR link switching, performing, by the second device, frame exchange of single-link multi-spatial streams.

The communication methods provided in the above-mentioned embodiments of the present application are described in detail below.

There are two non-AP MLDs working on the same link. A direct link relationship is established between the two in some way, and P2P transmission can be performed therebetween without AP relay. At least one of the two non-AP MLDs supports an EMLSR operation, that is, different operation mode parameters may be used at different stages of communication, such as switching available spatial streams (including send links and/or receive links) distributed on different links to a same link for sending or receiving frames. The operation mode parameter may be at least one of the number of spatial streams, a bandwidth, a decoding capability, a maximum media access control protocol data unit length, a maximum aggregate media access control service data unit length, or a maximum aggregate media access control protocol data unit length index.

It will be noted that a non-AP MLD (or a STA affiliated therewith) can interact with an AP MLD (or an AP affiliated therewith) for traffic information indication through, for example, a SCS negotiation mechanism, so as to apply for the AP MLD (or the AP affiliated therewith) to share a TXOP to the non-AP MLD (or STA affiliated therewith) for P2P transmission. The following implementations of the embodiments of the present application do not limit the above-mentioned information exchange process. In the subsequent description, the transmission opportunity request (TXOP Request) is used to refer to the above-mentioned information exchange process.

The implementation method is described by taking the non-AP MLDs each including two links as an example. As shown in the FIG. 13, non-AP Device 1 is a device having the capability to provide services to a non-AP MLD working in the EMLSR mode, and non-AP MLD 2 is a non-AP MLD having two working links that can switch an available spatial stream to a certain link by using the EMLSR mode, to implement single-link multi-spatial stream frame exchange. Non-AP Device 1 may perform single-link multi-spatial stream frame exchange with non-AP MLD2 working in EMLSR mode on one of the links of non-AP MLD2.

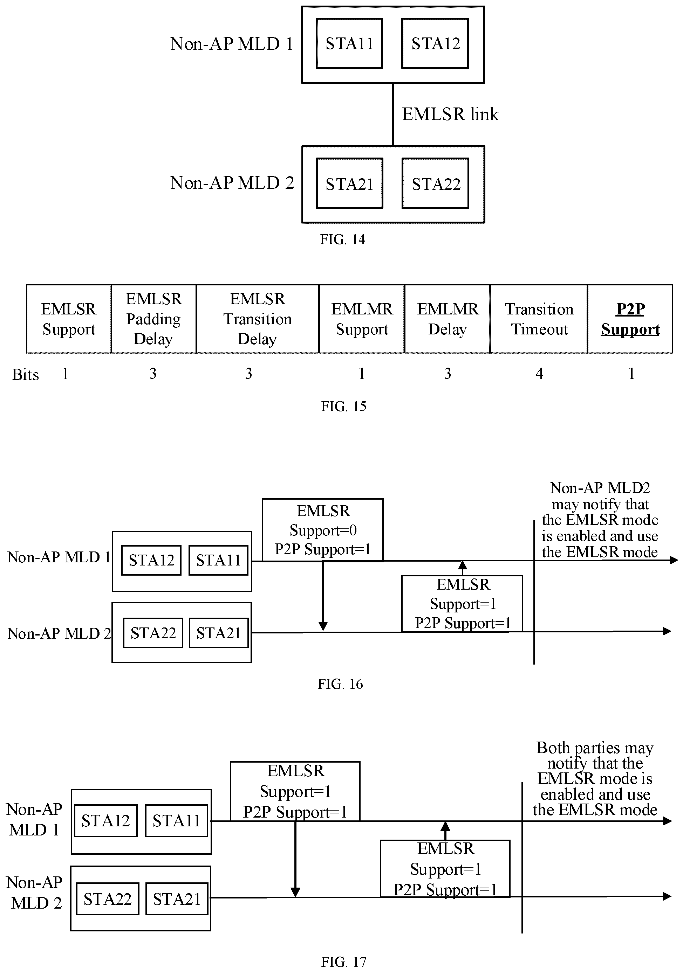

As shown in FIG. 14, non-AP Device1 may also non-AP MLD1 having two working links that can switch an available spatial stream to a certain link by using the EMLSR mode, to implement the single-link multi-spatial stream frame exchange. Non-AP MLD2 also has the capability to provide services to a non-AP MLD working in the EMLSR mode. In this case, non-AP MLD1 and non-AP MLD2 each have two affiliated STAs, in which STA11 and STA12 are affiliated with non-AP MLD1, and STA21 and STA22 are affiliated with non-AP MLD2. STA11 and STA21 work on a same link, which is recorded as link 1, and STA12 and STA22 work on a same link, which is recorded as link 2.

The various implementations and examples of the present application mainly include the following three aspects.

In a first aspect, a method for interacting enhanced multi-link operation capability information between devices capable of using a multi-link operation (MLO) is provided, specifically including the following contents.

There are two devices capable of supporting the MLO and work on a same link. A direct link relationship is established between the two devices in some way, and P2P transmission can be performed therebetween without AP relay.

Among the above two devices, at least one device supports the EMLSR operation, and the other device supports providing services to a device working in the EMLSR mode. In one case, a device supporting the EMLSR operation is a P2P responder device, and a device supporting providing services to a device in EMLSR mode is a P2P initiator device. In another case, the P2P initiator device may also support the EMLSR operation and work in the EMLSR mode, and the P2P responder device may also support providing services to a device in the EMLSR mode. It will be noted here that if the P2P initiator device supports the EMLSR operation and works in the EMLSR mode, the P2P responder device is required to also support providing services to a device in the EMLSR mode.

Supporting the EMLSR operation means that different operation mode parameters may be used at different stages of communication, such as switching available spatial streams (including send links and/or receive links) distributed on different links to a same link for sending or receiving frames.

Supporting services to a device working in the EMLSR mode means that when initiating transmission, a device working in the EMLSR mode may be instructed in some way to switch an available spatial stream and reserve corresponding switching time.

As shown in FIG. 15, there is a new enhanced multi-link capability subfield, one reserved bit in the existing enhanced multi-link capability subfield is used to indicate whether the use of the EMLSR in P2P transmission is supported, which is called the "P2P Support" subfield, as shown by the bold underline in FIG. 15.

Among them, the P2P Support bit in the enhanced multi-link capability subfield sent by the AP MLD is still reserved, without meaning. In the enhanced multi-link capability subfield sent by the non-AP MLD, if the P2P Support is set to 1, it means that it has the capability to provide services to a device working in the EMLSR mode. If P2P Support is set to 0, it means that it does not have the capability to provide services to a device working in the EMLSR mode. The description of each subfield is shown in Table 1. The bold underline in Table 1 shows the description corresponding to P2P Support.

**Table 1**

| Subfield | Definition | Coding |
|---|---|---|
| EMLSR Support | Indicates supporting for an EMLSR operation | For an AP MLD: |
| | | when the AP MLD device has the capability to provide services to a device working in the EMLSR mode, this bit is set to 1; otherwise, this bit is set to 0. |
| | | For a non-AP MLD: |
| | | when the device supports an EMLSR operation, there are combined spatial streams, and when performing single-link multi-spatial stream transmission, this subfield is set to 1; otherwise, it is set to 0. |
| | | For non-AP and non-MLD devices, this bit is set to 0. |
| P2P Support | Indicates supporting capable of providing services to a device working in the EMLSR state | For an AP MLD: |
| | | Used for reservation, without meaning. |
| | | For a non-AP device (STA or MLD): |
| | | when the device has the capability to provide services to a peer device working in the EMLSR mode, this bit is set to 1, otherwise, it is set to 0. |

Exemplarily, the interaction process of the enhanced multi-link capability information is described as follows.

### 1) Interaction example 1 of the enhanced multi-link capability information

In a scenario where an AP MLD and a non-AP MLD interact for capability information, an EML Capabilities subfield is carried in an association request frame (Association Request) sent by the non-AP MLD to the AP MLD associated therewith, in which an EMLSR Support is set to 1 and a P2P Support is set to 1. After receiving the association request frame, the AP MLD is informed that the non-AP MLD supports the EMLSR operation and supports providing services to a device working in the EMLSR mode. The AP MLD then sends an association response frame (Association Response) to the non-AP MLD, which contains the EML Capabilities subfield, and the EMLSR Support subfield is set to 1.

After completing the interaction, non-AP MLD2 may notify that the EMLSR mode is enabled and use the EMLSR mode.

Through the above interaction process, the non-AP MLD may use the EML operation mode notification (OMN) frame to notify that the EMLSR mode is enabled to the AP MLD, and then use the EMLSR operation to perform frame interaction. Optionally, if the AP MLD does not support EMLSR, the non-AP MLD is not allowed to send the EML OMN frame with EMLSR Mode=1.

### 2) Interaction example 2 of the enhanced multi-link capability information

In a scenario where non-AP MLD1 and non-AP MLD2 interact for capability information, as shown in FIG. 16, when non-AP MLD1 establishes a P2P relationship with non-AP MLD2, the interaction of enhanced multi-link capability information is carried therein. For example, when the relationship is established through TDLS, non-AP MLD1 sends a TDLS Setup Request frame carrying a certain multi-link element (such as a basic multi-link element or a P2P variant multi-link element), which contains an EML Capabilities subfield, and P2P Support is set to 1. When non-AP MLD2 responds with TDLS Setup Response, there carries a certain multi-link element (such as a basic multi-link element or a P2P variant multi-link element) with an EML Capabilities subfield, and EMLSR Support is set to 1.

After completing the interaction, non-AP MLD2 may notify that the EMLSR mode is enabled and use the EMLSR mode.

### 3) Interaction example 3 of the enhanced multi-link capability information

In a scenario where non-AP MLD1 and non-AP MLD2 interact for capability information, as shown in FIG. 17, when non-AP MLD1 establishes a P2P relationship with non-AP MLD2, the interaction of enhanced multi-link capability information is carried therein. For example, when the relationship is established through TDLS, non-AP MLD1 sends a TDLS Setup Request frame carrying a certain multi-link element (such as a basic multi-link element or a P2P variant multi-link element), which contains an EML Capabilities subfield, and EMLSR Support and P2P Support are set to 1. When non-AP MLD2 responds with TDLS Setup Response, there carries a certain multi-link element (such as a basic multi-link element or a P2P variant multi-link element) with an EML capability subfield, and EMLSR Support is set to 1 and P2P Support is set to 1.

After completing the interaction, both devices may notify that the EMLSR mode is enabled and use the EMLSR mode.

### 4) Interaction example 4 of the enhanced multi-link capability information

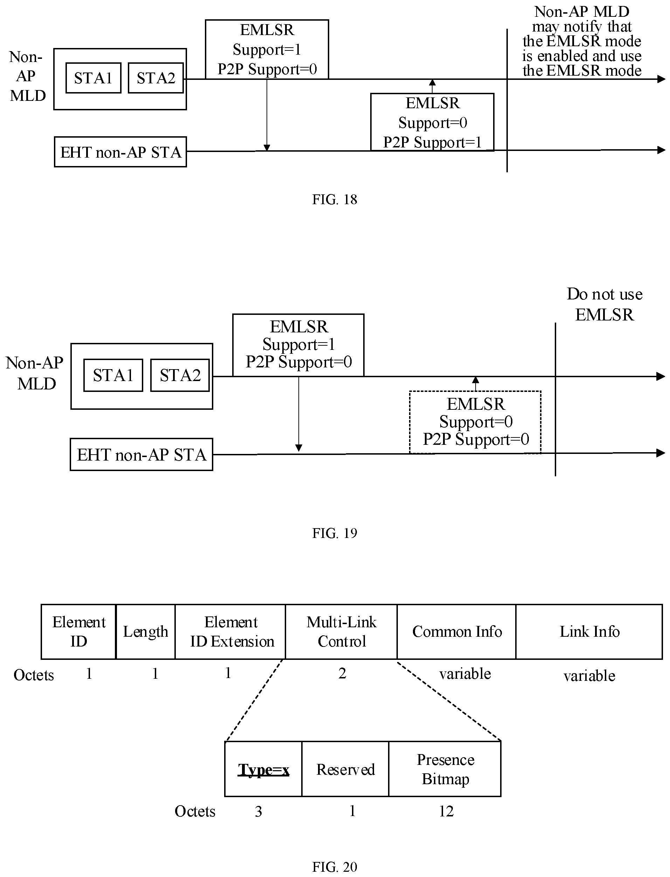

In a scenario where a non-AP MLD and an EHT non-AP STA interact for capability information, as shown in FIG. 18, when the non-AP MLD establishes a P2P relationship with the EHT non-AP STA on a certain link, the interaction of enhanced multi-link capability information is carried therein. For example, when the relationship is established through TDLS, non-AP MLD1 sends a TDLS Setup Request frame carrying a certain multi-link element (such as a basic multi-link element or a P2P variant multi-link element), which contains an EML Capabilities subfield, and EMLSR Support is set to 1. When the EHT non-AP STA responds with TDLS Setup Response, there carries a certain multi-link element (such as a basic multi-link element or a P2P variant multi-link element) with an EML capability subfield, and P2P Support is set to 1.

After completing the interaction, the non-AP MLD maybe notified that the EMLSR mode is enabled and use the EMLSR mode.

### 5) Interaction example 5 of the enhanced multi-link capability information

In a scenario where a non-AP MLD and an EHT non-AP STA interact for capability information, as shown in FIG. 19, when the non-AP MLD establishes a P2P relationship with the EHT non-AP STA on a certain link, the interaction of enhanced multi-link capability information is carried therein. For example, when the relationship is established through TDLS, non-AP MLD1 sends a TDLS Setup Request frame carrying a certain multi-link element (such as a basic multi-link element or a P2P variant multi-link element), which contains an EML Capabilities subfield, and EMLSR Support is set to 1. When the EHT non-AP STA responds with TDLS Setup Response, there carries a certain multi-link element (such as a basic multi-link element or a P2P variant multi-link element) with an EML Capabilities subfield, and P2P Support is set to 0 or no multi-link element is carried therein.

The non-AP MLD shall not use the EMLSR mode.

Considering that when establishing a P2P communication relationship between peer devices, frames containing basic multi-link elements may not be exchanged, and some information in the basic multi-link elements is not necessary during P2P transmission. Exemplarily, a new type of multi-link element (i.e., the P2P variant multi-link element mentioned above) is designed, which is distinguished from other types of multi-link elements through a Type subfield of a multi-link control (Multi-Link Control) field in the multi-link element. The structure of the multi-link control field of the multi-link element is shown in FIG. 20, and the Type subfield shown in the bold underline in FIG. 20 is set to a certain reserved value (such as a value of 3). The definition of the Type subfield is shown in the bold underline in Table 2 below:

**Table 2**

| Type field value | Meaning |
|---|---|
| 0 | Basic |
| 1 | Probe Request |
| 2 | Reconfiguration |
| 3 | **P2P** |
| 4-7 | Reserved |

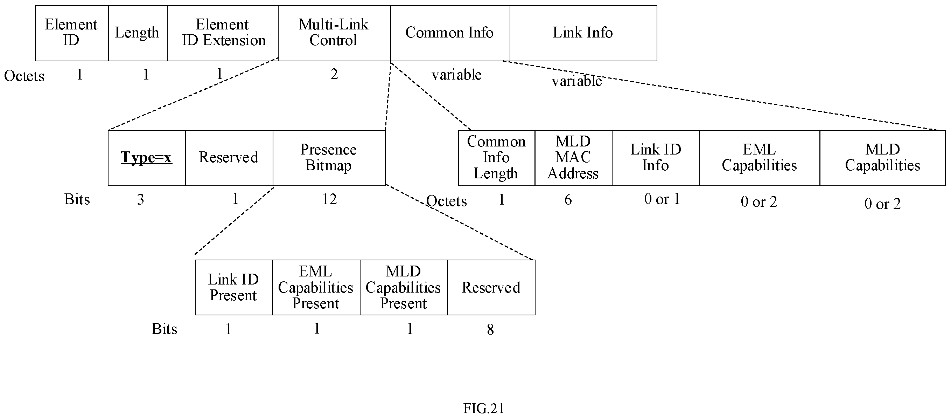

Among them, the common information field of the multi-link element of the P2P variant should include the EML capability subfield. The structure of the P2P variant multi-link element is shown in FIG. 21, and the Type subfield is shown in the bold underline in FIG. 21.

In a second aspect, a method for notifying an EML operation mode is provided, which specifically includes the following contents.
1. Notification Method 1: the change of the EMLSR mode is directly notified between peer devices by using the existing mechanism (sending an EML OMN frame and receiving the same EML OMN frame).

When intending to switch the EML operation mode (e.g., to a closed EMLSR mode), a certain device directly sends an EML OMN frame to all peer devices in a P2P manner and sets this frame accordingly. After the peer device receives the EML OMN frame, the certain device sends an EML OMN to the peer devices in a P2P manner for feedback.

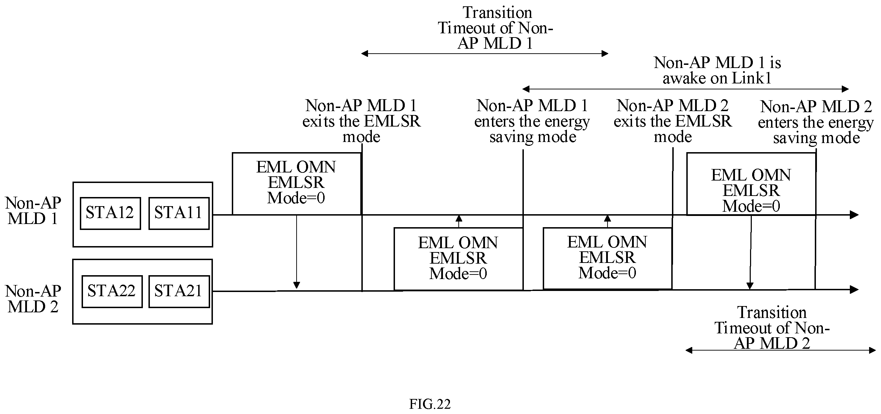

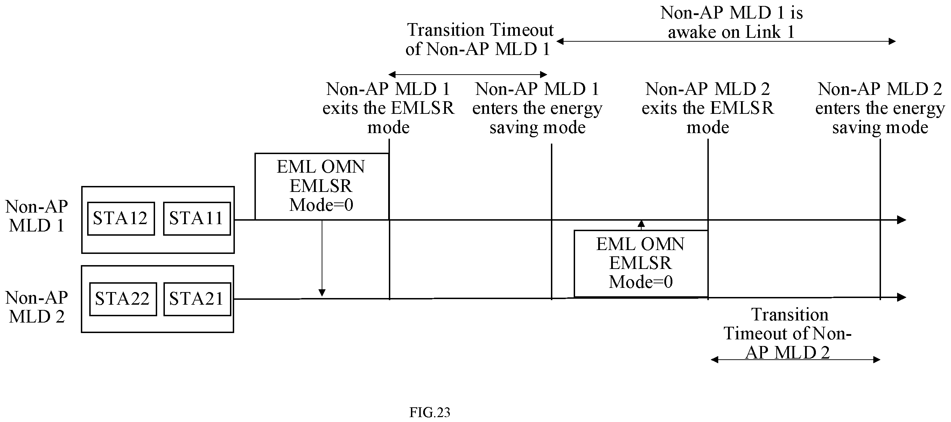

Possible interaction processes using this method are shown in FIG. 22 and FIG. 23, where non-AP MLD1 and non-AP MLD2 work in the EMLSR mode respectively and both need to exit the mode. The transmission of the EML OMN frame must meet the requirements of the EMLSR mode.

2. Notification method 2: an AP actively notifies the change of the EMLSR mode to a peer device.

When intending to switch the EML operation mode (e.g., to a closed EMLSR mode), a certain device interacts with an AP MLD for an EML OMN frame and then performs switching according to the rules. The AP MLD notifies the switching information to other devices at an appropriate time by using a newly designed peer MLD EML operation mode advertising frame. Here, the appropriate time refers to any time after an EML operation mode of a P2P responder device is switched and before the process of performing P2P transmission to the P2P responder device through triggered transmission opportunity sharing. Here, the peer MLD EML operation mode advertising frame may be a newly designed EHT Action frame, which is sent only in unicast manner. The structure of the peer MLD EML operation mode advertising frame is shown in Table 3, and the Peer MLD EML OM Info list field is shown in bold underline in Table 3.

**Table 3**

| Order | Information |
|---|---|
| 1 | Category |
| 2 | EHT Action |
| 3 | **Peer MLD EML OM Info list** |

Here, the Category and EHT Action fields are used to indicate that the peer MLD EML operation mode advertising frame belongs to an EHT Action frame and is the designed peer MLD EML operation mode advertising frame, respectively.

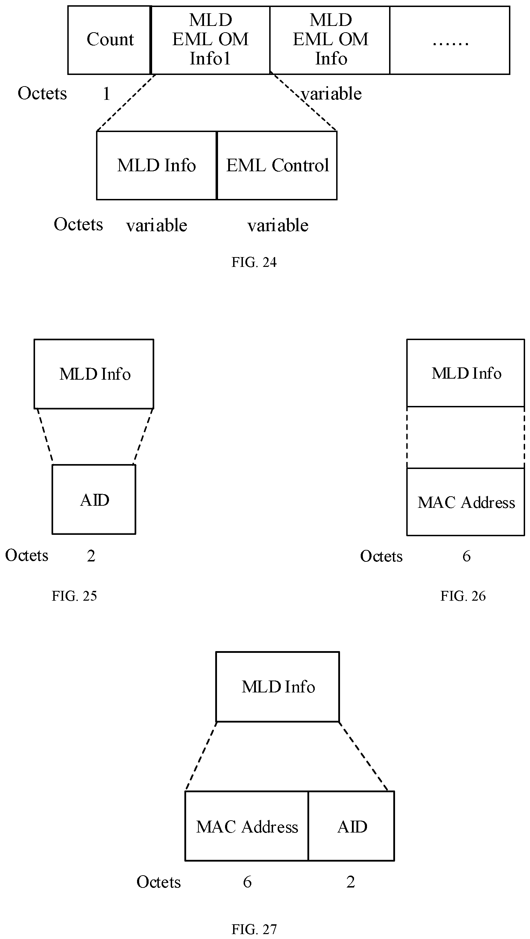

The structure of the Peer MLD EML OM Info list is shown in FIG. 24, where Count is the number of pieces of EML operation mode information carried, which is represented by the MLD EML OM Info subfield. The MLD EML OM Info field includes the MLD Info subfield and the EML Control subfield.

The MLD Info subfield is used to indicate identity information of a certain MLD, such as a MAC address of the MLD and/or an AID assigned when associated with the AP MLD, and possible structures are shown in FIG. 25, FIG. 26, and FIG. 27.

The EML Control field is used to indicate an EML operation mode corresponding to the non-AP MLD in the Peer MLD EML OM Info list, with the structure shown in FIG. 8.

It will be noted that necessary conditions for an EML operation mode information of a certain MLD to be attached to a current frame include that: 1, this MLD and a receiver MLD of this frame have P2P service requirements, and the AP MLD is aware of this situation; 2, this MLD has performed EMLSR operation mode switching.

Based on the above necessary conditions, if the AP MLD meets the condition that it is about to share the TXOP with the receiver MLD of the frame for the P2P transmission, the MLD may be used as an expected receiver in the shared TXOP. The following describes the possible interaction process carrying the operation mode information.

### Example 1:

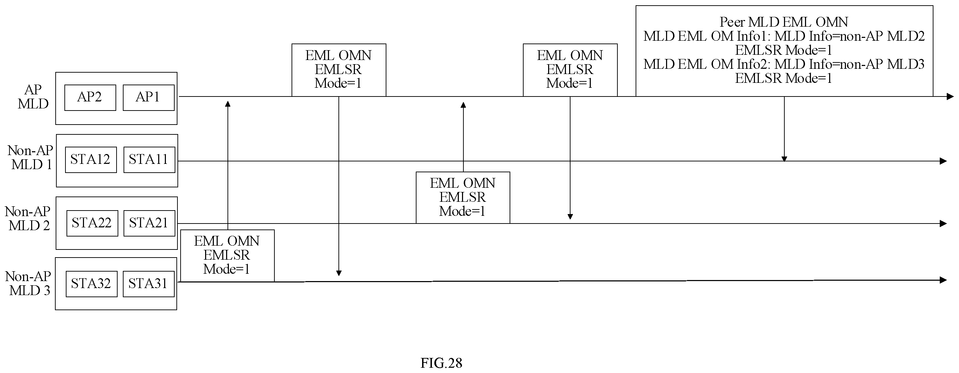

As shown in FIG. 28, non-AP MLD2 and non-AP MLD3 respectively send EML OMN frames to an AP MLD (e.g., link 1 in multiple links), set an EMLSR Mode subfield to 1 to notify that the EMLSR mode has been entered, and the AP MLD immediately feeds back the same EML OMN frame. After receiving the feedback frame, non-AP MLD 2 and 3 may complete the switching of the corresponding operation mode, turn on the EMLSR mode, exit an energy-saving mode and enter an active state. Afterwards, at a certain time, an AP notifies the switching of the EML operation mode of a peer device to the non-AP MLD1 by using the designed Peer MLD EML OMN frame.

### Example 2:

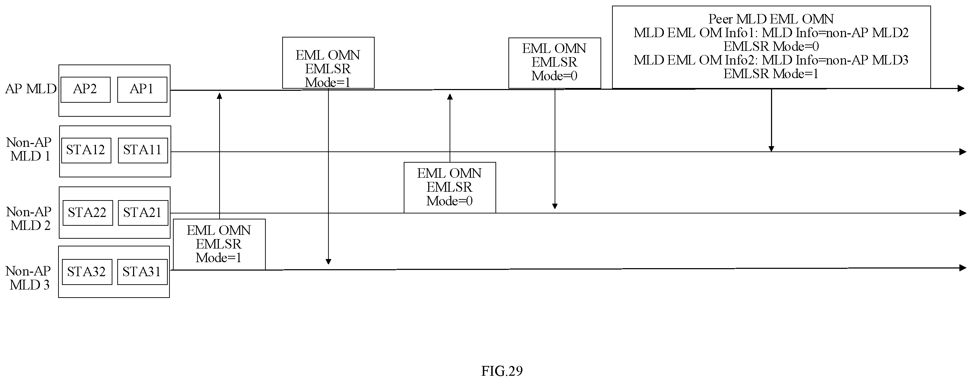

As shown in FIG. 29, non-AP MLD2 and non-AP MLD3 respectively send EML OMN frames to an AP MLD (e.g., link 1 in multiple links), set an EMLSR Mode subfield to 1 to notify that the EMLSR mode has been entered, and set the EMLSR Mode subfield to 0 to notify that the EMLSR mode has been entered. The AP MLD then immediately feeds back the same EML OMN frame. After receiving the feedback frame, non-AP MLD 2 and 3 may complete the switching of the corresponding operation mode, and enter and exit the EMLSR mode. Afterwards, at a certain time, an AP notifies the switching of the EML operation mode of a peer device to the non-AP MLD1 by using the designed Peer MLD EML OMN frame.

3. Notification method 3: AP passively notifies the change of the EMLSR mode to a peer device.

When intending to switch the EML operation mode (e.g., to a closed EMLSR mode), a certain device interacts with an AP MLD for an EML OMN frame according to the existing mechanism and then performs switching according to the rules.

And any device may apply to an AP MLD to be informed of EML operation modes of other devices by using the peer MLD EML operation mode request frame. After receiving the application, the AP MLD notify the switching information to other devices by using the newly designed peer MLD EML operation mode advertising frame.

The peer MLD EML operation mode request frame and the peer MLD EML operation mode advertising frame are newly designed frames with the following two implementation methods.
1) Implementation method 1 of the peer MLD EML operation mode request frame and the peer MLD EML operation mode advertising frame is described as follows. The two frames may use frames of different types.

The peer MLD EML operation mode request frame is a newly designed EHT Action frame and is sent only in unicast manner. The structure of the peer MLD EML operation mode request frame is shown in Table 4, in which Dialog Token and Peer MLD EML OM Info list fields are shown in the bold underline in Table 4.

**Table 4**

| Order | Information |
|---|---|
| 1 | Category |
| 2 | EHT Action |
| 3 | **Dialog Token** |
| 4 | **Peer MLD EML OM Info list** |

Here, the Category and EHT Action fields are used to indicate that the peer MLD EML operation mode request frame belongs to an EHT Action frame and is the designed peer MLD EML operation mode request frame, respectively.

The Dialog Token field is a non-zero value selected by a non-AP MLD that sends this request to identify this interaction.

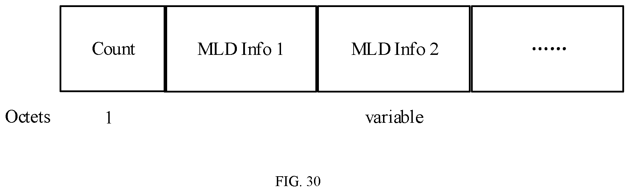

The structure of the Peer MLD EML OM Info list is shown in FIG. 30, where Count is the number of MLD Info subfields carried, where an MLD corresponding to the MLD Info subfield carried represents a peer non-AP MLD that requests the AP MLD to notify the EML operation mode.

Each MLD Info subfield is used to indicate identity information of a certain MLD, such as a MAC address of the MLD and/or an AID assigned when associated with the AP MLD, and the possible structures are shown in FIG. 25, FIG. 26, and FIG. 27.

The peer MLD EML operation mode advertising frame is a newly designed EHT Action frame and is sent only in unicast manner. The structure of the peer MLD EML operation mode advertising frame is shown in Table 5, in which Dialog Token and Peer MLD EML OM Info list fields are shown in the bold underline in Table 5.

**Table 5**

| Order | Information |
|---|---|
| 1 | Category |
| 2 | EHT Action |
| 3 | **Dialog Token** |
| 4 | **Peer MLD EML OM Info list** |

Here, the Category and EHT Action fields are used to indicate that the peer MLD EML operation mode advertising frame belongs to an EHT Action frame and is the designed peer MLD EML operation mode advertising frame, respectively. A value of the Dialog Token field is the same as a value of a Dialog Token field in a peer MLD EML operation mode request frame corresponding to the peer MLD EML operation mode notification. It will be noted that if the value of Dialog Token is 0, it means that the peer MLD EML operation mode notification is sent autonomously by the AP MLD without the request of the non-AP MLD.

The structure of the Peer MLD EML OM Info list is shown in FIG. 24, where Count is the number of MLD EML OM Info subfields carried.

Each EML OM Info contains an MLD Info subfield and an EML Control subfield. The MLD Info subfield is used to indicate identity information of a certain MLD, such as an MAC address of the MLD and/or an AID assigned when associated with the AP MLD, and the possible structures are shown in FIG. 25, FIG. 26, and FIG. 27.

The EML Control field may be used to indicate an EML operation mode corresponding to the non-AP MLD in the Peer MLD EML OM Info list.

2) Implementation method 2 of the peer MLD EML operation mode request frame and the peer MLD EML operation mode advertising frame is described as follows. The two frames may use a frame of a same type, and a sending direction of this frame determines its interpretation method.

The peer MLD EML operation mode request frame and the peer MLD EML operation mode advertising frame are newly designed EHT Action frames and are sent only in unicast manner. The structure of the peer MLD EML operation mode advertising frame is shown in Table 6, in which Dialog Token and Peer MLD EML OM Info list fields are shown in the bold underline in Table 6.

**Table 6**

| Order | Information |
|---|---|
| 1 | Category |
| 2 | EHT Action |
| 3 | **Dialog Token** |
| 4 | **Peer MLD EML OM Info list** |

Here, the Category and EHT Action fields are used to indicate that the peer MLD EML operation mode request/advertising frame belongs to an EHT Action frame and is the designed peer MLD EML operation mode request/advertising frame, respectively.

When the frame is sent from a non-AP MLD to an AP MLD, the frame is a peer MLD EML operation mode request frame, which is used to request the AP MLD for EML operation mode(s) of one or more non-AP MLDs contained in the frame. The Dialog Token field is a non-zero value selected by a non-AP MLD that sends the frame to identify this request. When the frame is sent from an AP MLD to a non-AP MLD, the frame is a peer MLD EML operation mode notification frame, which is used to notify EML operation mode(s) of one or more non-AP MLDs to the non-AP MLD. The value of the Dialog Token field is the same as the value of the Dialog Token field in the peer MLD EML operation mode request frame corresponding to the peer MLD EML operation mode notification. It will be noted that if the value of Dialog Token is 0, it means that the peer MLD EML operation mode notification is sent autonomously by the AP MLD without the request of the non-AP MLD.

The structure of the Peer MLD EML OM Info list is shown in FIG. 24, where Count is the number of MLD EML OM Info subfields carried.

Each EML OM Info contains an MLD Info subfield and an EML Control subfield. The MLD Info subfield is used to indicate identity information of a certain MLD, such as an MAC address of the MLD and/or an AID assigned when associated with the AP MLD, and the possible structures are shown in FIG. 25, FIG. 26, and FIG. 27.

If the frame is a peer MLD EML operation mode request frame sent by a non-AP device, the EML Control field has no actual meaning and may not exist or be set to a reserved value. If the frame is a peer MLD EML operation mode notification frame sent by an AP device, the EML Control field is used to indicate an EML operation mode corresponding to the non-AP MLD in the Peer MLD EML OM Info list. The following describes the possible interaction flow using the operation mode request frame.

### Example 1:

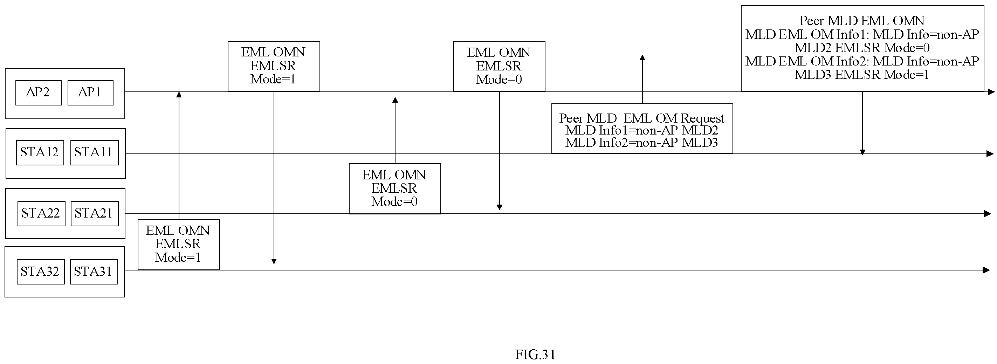

As shown in FIG. 31, non-AP MLD2 and non-AP MLD3 respectively send EML OMN frames to an AP MLD (e.g., link 1 in multiple links), set the EMLSR Mode subfield to 1 to notify that the EMLSR mode has been entered, and set the EMLSR Mode subfield to 0 to notify that the EMLSR mode has been entered. and the AP MLD immediately feeds back the same EML OMN frame. After receiving the feedback frame, non-AP MLD 2 and 3 may complete the switching of the corresponding operation mode, turn on and off the EMLSR mode, and exit and enter an energy-saving mode accordingly. At a certain time, non-AP MLD1 requests the EML operation modes of non-AP MLD2 and 3 from the AP MLD by using the designed Peer MLD EML OM Request frame. After receiving the request, the AP MLD notifies the switching of the EML operation mode of the peer device to non-AP MLD1 by using the designed Peer MLD EML OMN frame.

### Example 2:

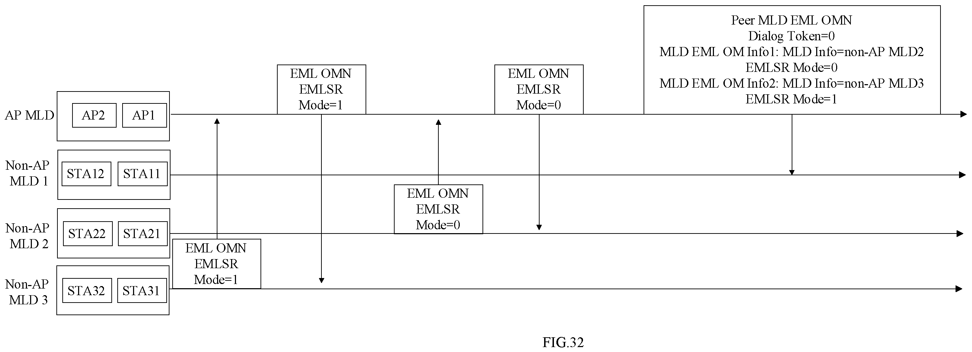

As shown in FIG. 32, non-AP MLD2 and non-AP MLD3 respectively send EML OMN frames to an AP MLD (e.g., link 1 in multiple links), set the EMLSR Mode subfield to 1 to notify that the EMLSR mode has been entered, and set the EMLSR Mode subfield to 0 to notify that the EMLSR mode has been entered. and the AP MLD immediately feeds back the same EML OMN frame. After receiving the feedback frame, non-AP MLD 2 and 3 may complete the switching of the corresponding operation mode, turn on and off the EMLSR mode, and exit and enter an energy-saving mode accordingly. At a certain time, the AP MLD directly notifies the switching of the EML operation mode of the peer device to non-AP MLD 1 by using the designed Peer MLD EML OMN frame. In the Peer MLD EML OMN frame, the Dialog Token field is set to 0.

If one of the two parties does not support the EMLSR function or uses the EML operation in P2P, this solution will not be continued subsequently. In this case, only the two devices will be allowed to send and receive frames on one link by using a basic spatial stream (e.g., a single-spatial stream).

In a third aspect, an interaction process used by the EMLSR operation in the P2P transmission is designed, which includes the following contents.

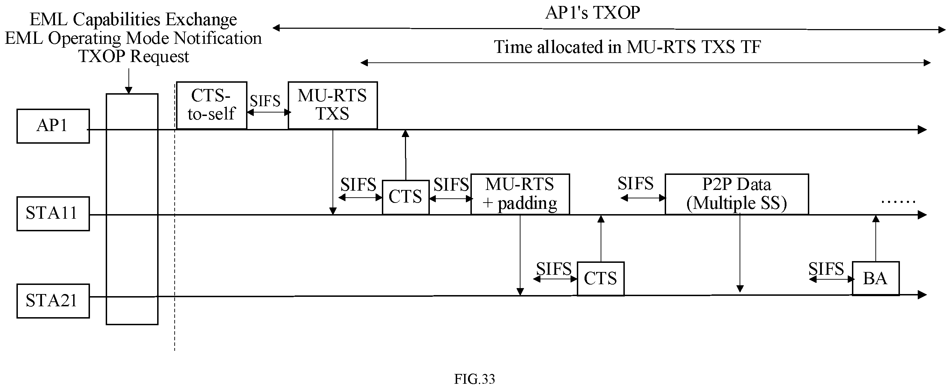

It will be noted that, before the start of this interaction process, it can be considered that a P2P initiator non-AP device has performed the above-mentioned interaction process called "TXOP Request" with an AP. Through this interaction process, the AP has been informed from the non-AP device that it has a need for P2P transmission, and obtained responder (or receiver) information of its P2P transmission, which will not be described in detail here.
1. Implementation method 1: in an EMLSR operation scenario where the P2P initiator non-AP MLD sends an initial control frame, devices need to interact with each other for the EML capability information and perform the EML operation mode notification before the interaction process starts. The interaction process is shown in FIG. 33, which includes the following contents.

In Step 1, peer non-AP MLDs interact with each other for the EML capability information and perform the EML operation mode notification.

It will be noted that the device using the present solution can perform the EML capability information interaction and the EML operation mode notification through various examples including but not limited to those provided in the first and second aspects of the embodiments of the present application.

There are many mechanisms for P2P communication using the WLAN standard. This example does not limit the specific form and process of capability information exchange. In one example, when TDLS is established, a TDLS Discovery Response frame, a TDLS Setup Request Action frame, and a TDLS Setup Response Action frame carry multi-link elements (such as the basic multi-link element and the P2P variant multi-link element mentioned above) containing the EML capability information field.

In Step 2, an AP MLD shares a TXOP with a STA (e.g., STA11) affiliated with the P2P initiator non-AP MLD through the triggered TXOP sharing mechanism of mode 2 on a certain link (e.g., link 1).

In some examples, a non-AP MLD that is required to work in the EMLSR mode may receive a MU-RTS TXS frame on an EMLSR link set on which it works and parse the MU-RTS TXS frame. Otherwise, if the P2P initiator non-AP MLD also works in EMLSR mode, it is necessary to trigger the EMLSR switching of the P2P initiator non-AP MLD through the existing mechanism before the MU-RTS TXS frame is sent.

In Step 3, EMLSR link switching interaction is performed.

In some examples, after obtaining the TXOP from the AP through the triggered TXOP sharing mechanism (after responding to the CTS to the AP), the STA (e.g., STA11) affiliated with the P2P initiator non-AP MLD sends an EMLSR initial control frame (e.g., a MU-RTS) to a STA (e.g., STA21) affiliated with the peer non-AP MLD on the link in a form of a single-spatial stream on the link, and performs corresponding padding therein.

In some examples, when sending the initial control frame, the P2P initiator non-AP MLD (non-AP MLD1) performs the EMLSR link switching at the same time, and the P2P responder non-AP MLD (non-AP MLD2) performs switching according to the existing mechanism. The padding time length of the initial control frame needs to ensure that the EMLSR link switching of both parties can be completed. A natural method is to select a larger value of the capability information notified by both parties as the padding time. However, considering that in actual implementation, the P2P initiator may start the EMLSR link switching earlier, and considering the universality of the mechanism, only the switching delay requirement of the P2P responder non-AP MLD can be considered.

In some examples, the P2P initiator non-AP MLD may perform EMLSR link switching within the time period corresponding to receiving a MU-RTS TXS sent by the AP MLD and performing feedback to the MU-RTS TXS, and/or within the time period of sending an initial control frame to the P2P responder device and receiving feedback. The P2P initiator non-AP MLD needs to ensure to have the capability to start multi-spatial stream transmission immediately after the STA affiliated with the P2P responder non-AP MLD responds to the initial control frame, that is, to be in the EMLSR single-link multi-spatial stream frame exchange operation mode.

In Step 4, frame exchange is performed.

In some examples, after the STA (e.g., STA21) affiliated with the P2P responder non-AP MLD completes the link switch (responding to the STA affiliated with the P2P initiator non-AP MLD with a CTS), the two parties may exchange single-link multi-spatial stream frames.

In some examples, if the STA (e.g., STA21) affiliated with the P2P responder non-AP MLD does not feed back to the initial control frame (e.g., setting a NAV, or other problems occur in the device), the P2P initiator non-AP MLD shall not perform subsequent data transmission.

In some examples, the timing for the non-AP MLD to end the link merging state and switch back to the listening operation state follows the prescribed existing mechanism. After the time indicated by the corresponding EMLSR Transition Delay after the end of the allocated TXOP, the AP MLD considers that the corresponding non-AP MLD has ended the link merging state and returned to the listening operation mode.

2. Implementation method 2: in a scenario where a MU-RTS TXS or a variant of a MU-RTS is used to indicate switching, it will be noted that in the TXOP Request process, the P2P initiator non-AP MLD not only indicates the required TXOP time, but also indicates address information of a target receiver with which the P2P initiator non-AP MLD is to perform P2P communication, and the target receiver is in an associated state with the AP MLD and interacts the EML capability information. There is no requirement for devices to perform EML capability information exchange therebetween and the EML operation mode notification.

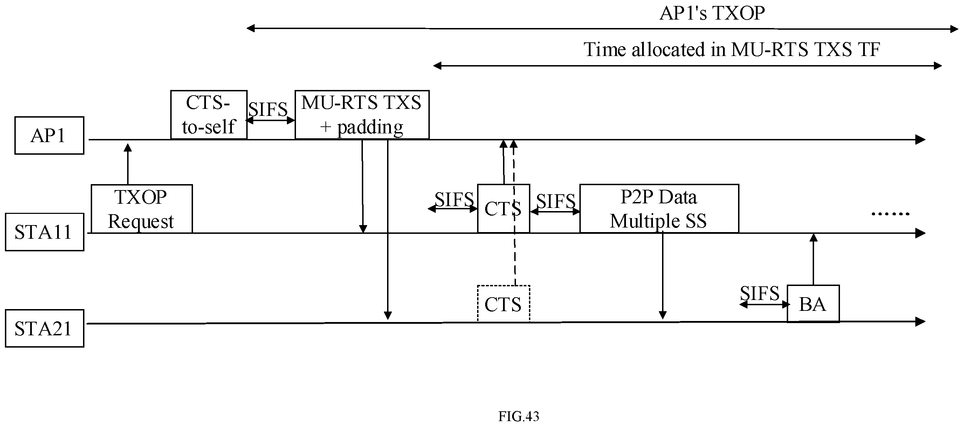

Before the interaction process starts, the devices need to perform the EML capability information exchange therebetween and the EML operation mode notification, as shown in FIG. 43, which includes the following content.

In Step 1, there is an AP triggered TXOP sharing mechanism.

In some examples, an AP MLD performs channel access on a certain link (e.g., link 1); and after obtaining a TXOP, the AP MLD sends a MU-RTS TXS frame or a variant frame of the MU-RTS with a TXOP sharing mode subfield being 2, shares the TXOP with the STA (e.g., STA11) affiliated with the P2P initiator non-AP MLD, and at the same time, also sends this MU-RTS TXS frame to the STA (e.g., STA21), working on this link, affiliated with the P2P responder non-AP MLD indicated by the P2P initiator non-AP MLD.

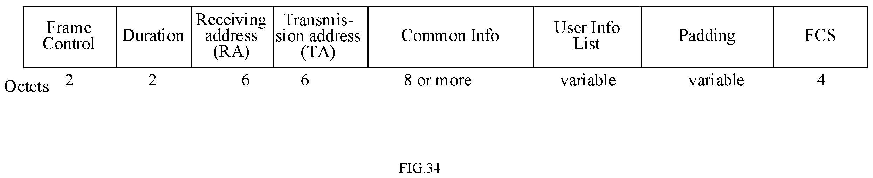

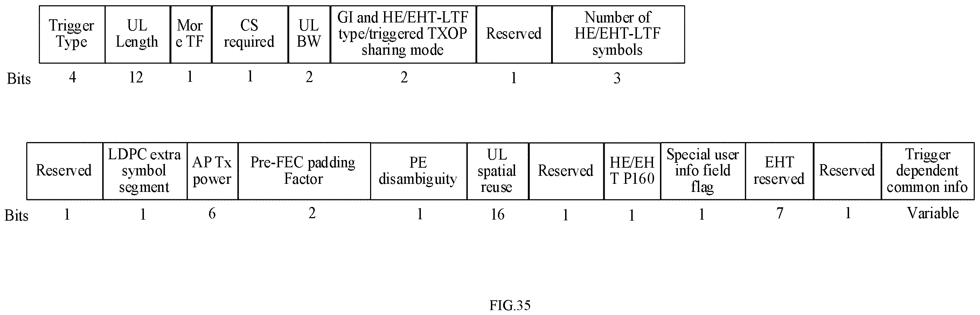

In some examples, a MU-RTS TXS is implemented by setting a GI and HE/EHT-LTF type/Triggered TXOP Sharing Mode subfield of the common information field in the MU-RTS frame, and as shown in FIG. 34 and FIG. 35, a previous MU-RTS frame has a reserved value for this field. If the reserved value is set to 0, it indicates that the MU-RTS frame is not a MU-RTS TXS frame.

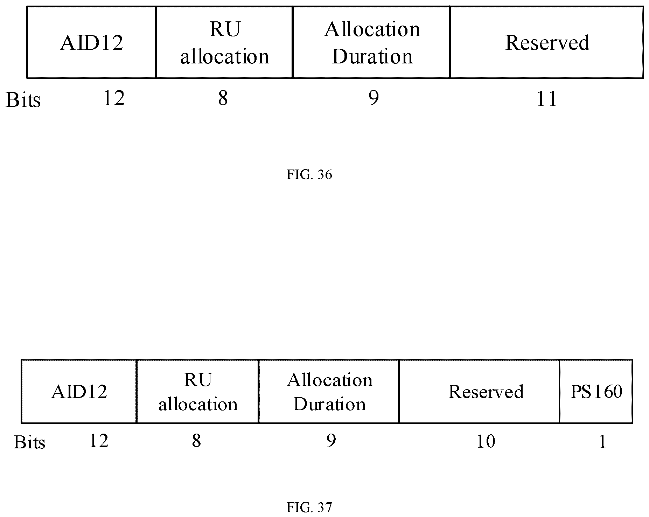

The user information list field of the MU-RTS TXS trigger frame is used to implement an indication of a TXOP duration and an indication of a receiver, as shown in FIG. 36 and FIG. 37. AID12 subfield is used to indicate AID information of a device that needs to process the frame, PS160 subfields in a resource unit (RU) allocation and an EHT structure are used to indicate an allocated resource block information, and an Allocation Duration field is used to indicate the allocated TXOP duration, which is in units of 16 microseconds.

In some examples, a method of Option 1 (Opt1) may be used, that is, the existing MU-RTS TXS frame is used directly without changing the MU-RTS TXS, and Allocation Duration=0 is used to indicate the receiver.

Specifically, a receiving address RA may be set as a broadcast address, and the user information of both the P2P initiator and the P2P responder may be carried in the user information list at the same time. The P2P initiator still uses the existing mechanism, but the difference is that the Allocation Duration field of the P2P responder is set to 0, so as to indicate that the P2P responder is a P2P responder (no available TXOP is allocated to the P2P responder). And the two devices are specified to respond to a CTS in different RUs (different 20 MHz sub-channels).

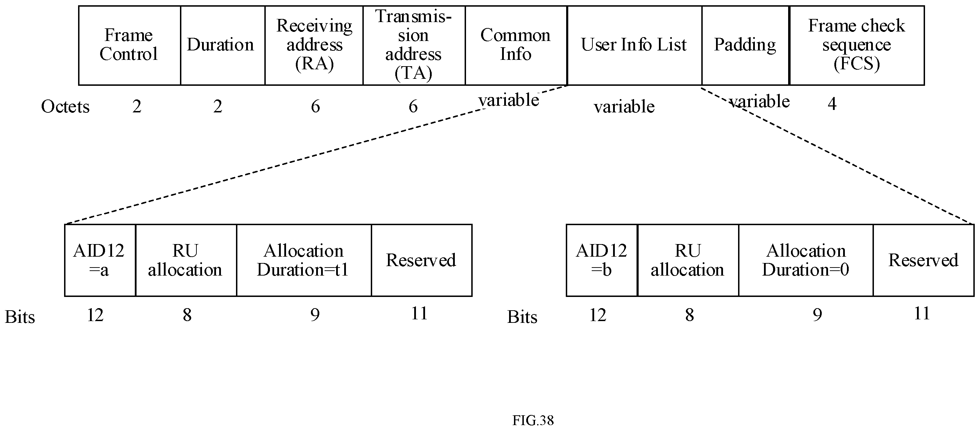

At the same time, the frame is filled according to the EML capability information interacted during association, so that non-AP MLDs (non-AP MLD1 and non-AP MLD2) receiving the frame have enough time to perform switching. An example of Opt1 is shown in FIG. 38.

In some examples, a method of Option 2 (Opt2) may also be adopted, which is implemented through a new MU-RTS variant.

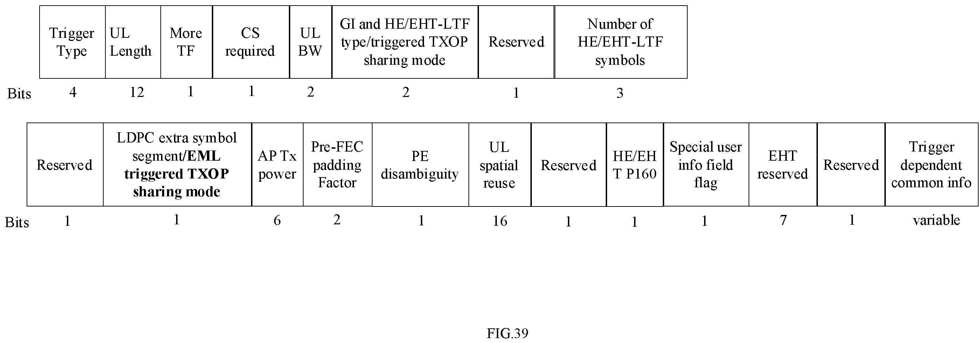

Specifically, as shown in FIG. 39, a LDPC extra symbol segment field used as a reserved field in the common information field in the MU-RTS frame (for example, a 1-bit reservation, starting from B27 to the end of B27 of the common information field) is interpreted as an EML Triggered TXOP sharing mode subfield, as shown by the bold underline in FIG. 39.

It will be noted that in other Trigger frames, this field is still interpreted as a LDPC extra symbol segment. Only in Trigger frames of a MU-RTS type, this field is interpreted as an EML Triggered TXOP sharing mode. It is only necessary to set the Triggered TXOP sharing mode to 2 and the EML Triggered TXOP sharing mode subfield to 1 when in use, indicating that the MU-RTS is a special MU-RTS TXS used in this implementation method, called a MU-RTS ETXS.

MU-RTS ETXS also has the following functions: triggering the receiver device of this frame to perform EMLSR link switching and sharing TXOP for P2P initiator to perform P2P transmission.

The User Info field of the MU-RTS ETXS has the same format as the User Info field of the proposed MU-RTS TXS, as shown in FIG. 36 and FIG. 37. The difference is that, in the User Info field of the MU-RTS ETXS, it is possible to indicate in some way that a device corresponding to the User Info is a receiver device of the allocated TXOP. For example, by adopting the above-mentioned Opt1 method, the Allocation Duration may be set to 0 to implement the above-mentioned function; for another example, by adopting the above-mentioned Opt2 method, a certain bit in the reserved field may be used to identify that the device corresponding to the User Info field is a holder or responder of the allocated TXOP, where the holder of the TXOP is the P2P initiator of the P2P transmission, and the responder of the TXOP is an expected receiver in the TXOP transmission, that is, the receiver of the P2P transmission indicated by Allocation Duration=0 in the User Info. Furthermore, a device indicated as a TXOP Responder should not return to the listening mode immediately after completing the EMLSR switching, but must hold this state for a period of time to receive P2P data transmitted in multi-spatial streams. For example, when to return to the listening mode may be decided by referring to the method of determining the end of frame exchange and returning to the listening mechanism in the single-link multi-spatial stream frame exchange between the non-AP MLD and the AP MLD using the EMLSR mode.

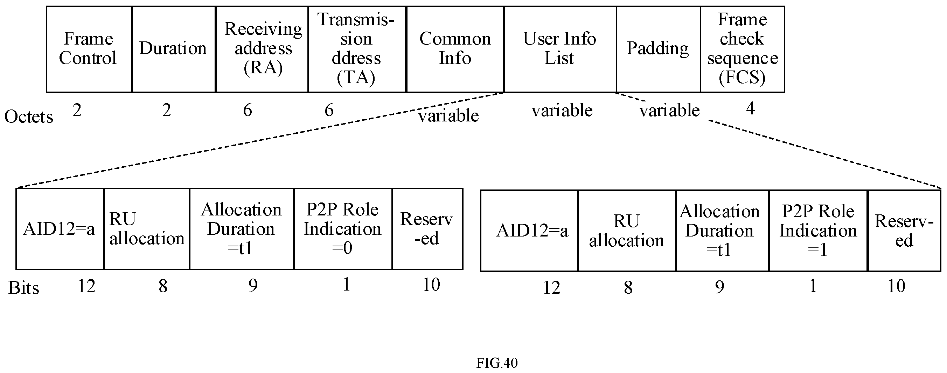

In an example of using the above-mentioned Opt2 method, the P2P receiver is identified by using a newly defined field is used in User Info, as shown in FIG. 40. For a reserved bit in the User Info field of the newly defined MU-RTS ETXS, taking the User Info field of the HE variant as an example, as shown in Table 7, the newly defined bit is named a P2P Role Indication. If the field is equal to 0, it means that the device corresponding to the User Info is the holder of the allocated TXOP; and if the field is equal to 1, it means that the device corresponding to the User Info is the responder of the allocated TXOP.

**Table 7**

| P2P Role Indication | definition |
|---|---|
| 0 | For a device capable of recognizing the MU-RTS ETXS, the device corresponding to the User Info field with this bit set to 0 is considered to be the holder of the allocated TXOP, and the device may perform uplink or P2P transmission within the allocated time; and |
| | For a device not capable of recognizing the MU-RTS ETXS, this bit has no meaning, and the MU-RTS ETXS frame is recognized as a common MU-RTS TXS frame. |
| 1 | For a device capable of recognizing the MU-RTS ETXS, the device corresponding to the User Info field with this bit set to 1 is considered to be the responder of the allocated TXOP, indicating that the device may act as a P2P responder during the allocated time; and |
| | For a device not capable of recognizing the MU-RTS ETXS, this bit has no meaning, and the MU-RTS ETXS frame is recognized as a common MU-RTS TXS frame. |

To prevent misinterpretation by devices not capable of recognize recognizing the EML Triggered TXOP sharing mode subfield, devices that do not support this solution will not be indicated in the User Info field of the MU-RTS ETXS.

In some examples, both the Opt1 method and the Opt2 method can support allocating a TXOP to multiple devices using one frame, and the TXOP allocation depends on the arrangement order of the User Info.

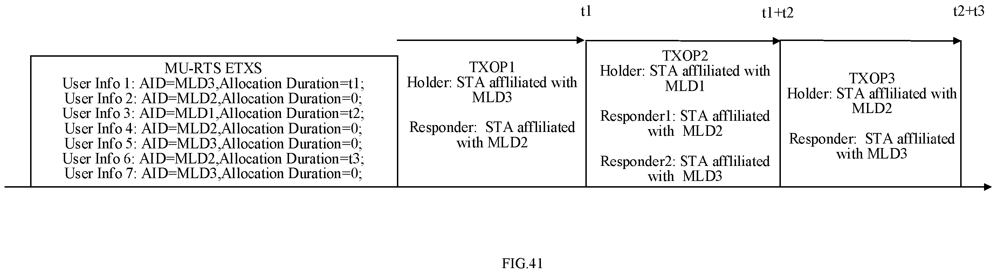

Specifically, for the Opt1 method, starting from a User Info with an Allocation Duration not equal to 0 and ending with the next User Info with an Allocation Duration not equal to 0, each User Info with an Allocation Duration of 0 during this period is a potential Responder of the first TXOP, and the start time of the next TXOP is after the end time of the previous TXOP. For example, if the Allocation Duration values of the User Info field are t1, 0, t2, 0, 0, t3, and 0 respectively, it means that: the first TXOP starts at time 0 and ends at time t1, where the holder is device 1, and the responder is device 2; the second TXOP starts at time t1 and ends at time t1 + t2, where the holder is device 3, and the responders are devices 4 and 5; and the third TXOP starts at time t1+t2 and ends at time t1+t2+t3, where the holder is device 6, and the responder is device 7. The corresponding device needs to perform the switching of the EMLSR mode as needed. Possible extensions of allocating multiple TXOPs at one time based on the Opt1 method are shown as FIG. 41.

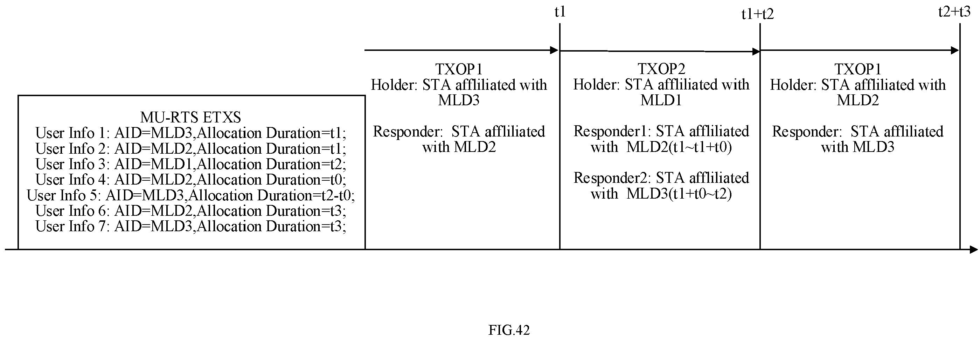

Specifically, for the Opt2 method, the start and end times of the TXOP are interpreted in pairs according to the value of Direction. Possible extensions of allocating multiple TXOPs at one time based on the Opt2 method are shown in FIG. 42.

In Step 2, the non-AP MLD performs the EMLSR link switching.

In some examples, a non-AP MLD that needs to work in the EMLSR mode may receive and parse MU-RTS TXS frames.

In some examples, when the STA (STA21) affiliated with the P2P responder non-AP MLD receives the MU-RTS TXS or the designed MU-RTS TXS variant frame (MU-RTS ETXS) sent by the AP affiliated with the AP MLD, the EMLSR link switching is directly performed, and it is ensured that the single-link multi-spatial stream frame exchange is capable of being performed on the link (link 1) after the CTS response is sent.

In some examples, if both parties are non-AP MLDs working in EMLSR mode, when STA11 affiliated with non-AP MLD1 of the P2P initiator and STA21 affiliated with non-AP MLD of the P2P responder jointly receive the MU-RTS TX or the designed MU-RTS variant frame sent by the AP affiliated with AP MLD, the EMLSR link switching is directly performed, and it is ensured that the single-link multi-spatial stream frame exchange is capable of being performed on the link (link 1) after the CTS response is sent.

In Step 3, the STA affiliated with the non-AP MLD performs the single-link multi-spatial stream frame exchange by using the TXOP shared by the AP.

In some examples, the timing for the non-AP MLD to end the link merging state and switch back to the listening operation state follows the prescribed existing mechanism. That is, after the time indicated by the corresponding EMLSR Transition Delay after the end of the allocated TXOP, the AP MLD considers that the corresponding non-AP MLD has ended the link merging state and returned to the listening operation mode.

3. Implementation method 3: in a scenario of step-by-step indication of the AP MLD for the EMLSR link switching and triggered TXOP sharing, in the TXOP Request process, the P2P initiator non-AP MLD not only indicates the TXOP time required by the P2P initiator non-AP MLD, but also indicates address information of a target P2P responder with which the P2P initiator non-AP MLD wants to perform the P2P communication. The target P2P responder and the AP MLD are in an associated state and interact with each other for the EML capability information.

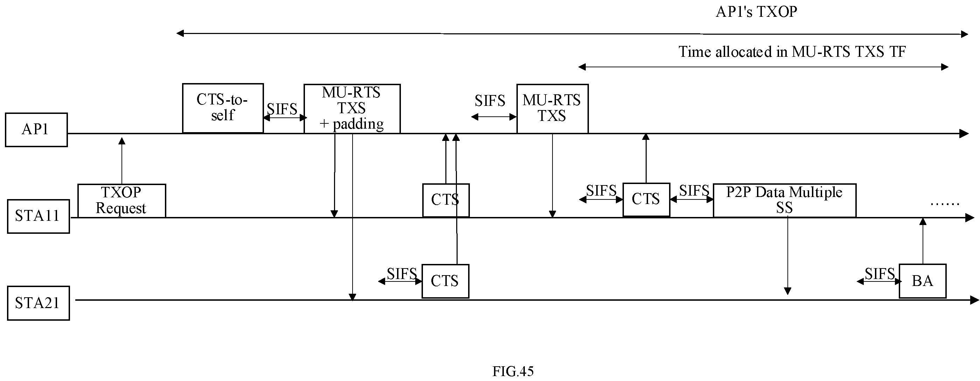

Before the interaction process begins, the devices need to perform the EML capability information exchange and EML operation mode notification therebetween, as shown in FIG. 45, including the following content.

In Step 1, the AP MLD indicates both devices to perform the EMLSR link switching.

In some examples, after competing for a TXOP on a certain link (such as link 1), the AP MLD sends an initial control frame (e.g., a MU-RTS) to the STA21 affiliated with the P2P responder non-AP MLD working on this link to indicate two peer non-AP MLDs to perform the EMLSR link switching.

In some examples, if both parties are non-AP MLDs working in the EMLSR mode, the AP sends an initial control frame (e.g., a MU-RTS) to both the STA11 affiliated with the P2P initiator non-AP MLD1 and the STA21 affiliated with the P2P responder non-AP MLD, so as to indicate two peer non-AP MLDs to perform the EMLSR link switching. The initial control frame is sent in broadcast form, and indicates the resource information used for feedback in the corresponding user information. In addition, padding length may ensure that the P2P initiator and the P2P responder non-AP MLD have enough time to complete the EMLSR link switch (available with the existing mechanism).

In some examples, if during the interaction, the non-AP MLD does not respond to the initial control frame sent by the AP MLD, that is, the initial frame interaction is not completed, the AP MLD will consider that the conditions for using EMLSR communication are not met and the subsequent process will no longer proceed. In this case, the non-AP MLD that has performed the EMLSR link switching and is in the link merging state may refer to the existing mechanism, that is, after the non-AP MLD performs the single-link multi-spatial stream frame interaction with the AP MLD by using the EMLSR mode, when to return to the listening mode may be decided by the method of determining the end of the operation and returning to the listening mechanism.

In Step 2, the AP MLD performs the triggered TXOP sharing process.

In some examples, the existing Triggered TXOP Sharing process may be used.

It will be noted that since the MU-RTS TXS is sent to the STA (STA11) affiliated with the P2P initiator non-AP MLD, according to the existing rules, the P2P responder non-AP MLD will perform a reverse EMLSR link switching, that is, switching from the single-link multi-spatial stream frame exchange operation mode back to the listening operation mode after not receiving a frame of a specified type within a period of time after completion. Therefore, the following additional rules need to be added to prevent the above situation.
1) Rule 1, after the device that receives the initial control frame (e.g., a MU-RTS) completes the switching (counting from the time after the feedback is sent), it holds the single-link multi-spatial stream frame exchange operation state for at least a period of time. After that, the non-AP MLD performs the single-link multi-spatial stream frame interaction with the AP MLD by using the EMLSR mode. And after that, when to return to the listening mode may be decided by the method of determining the end of the operation and returning to the listening mechanism, and the corresponding switching operation is completed.

For the above period of time, the period of time is reserved for the AP to perform the Triggered TXOP Sharing mechanism to another device. Optionally, the period of time may be: a time of the MU-RTS TXS sent at the lowest rate + 2*SIFS + a time of the CTS sent at the lowest rate.

Implementation method 1: Rule 1 is used as a predefined rule of the EMLSR part, that is, all devices that have established the P2P relationship and are in the EMLSR mode wait for at least the above time after receiving the initial control frame.

Implementation method 2: a new MU-RTS variant is defined, to distinguish different switching time conditions.

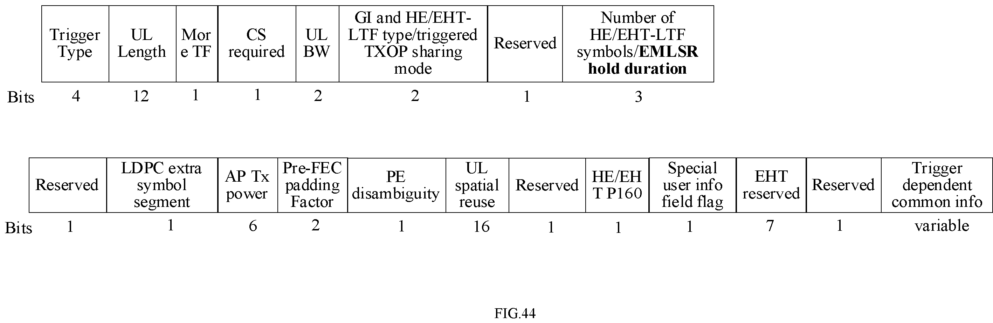

Exemplarily, as shown in FIG. 44, a reserved Number of HE/EHT-LTF symbols subfield in the MU-RTS frame is used to indicate a time at least required to hold the EMLSR link switching indicated by the frame, in units of 32 microseconds.

It will be noted that in Trigger frames of other types, this field is still interpreted as the Number of HE/EHT-LTF symbols subfield. Only if the Trigger frame is the MU-RTS, this field is interpreted as the designed EMLSR hold duration subfield.

2) Rule 2, the MU-RTS TXS frame is also sent to the corresponding STA (e.g., STA21) affiliated with the P2P responder non-AP MLD, and the corresponding STA (e.g., STA21) affiliated with the P2P responder non-AP MLD is required to perform feedback to the CTS. The specific implementation method is the same as the relevant description in the above implementation method 2.

In Step 3, the STA affiliated with the non-AP MLD perform the single-link multi-spatial stream frame exchange by using the TXOP shared by the AP.

In some examples, the timing for the non-AP MLD to end the link merging state and switch back to the listening operation state follows the prescribed existing mechanism. After the time indicated by the corresponding EMLSR Transition Delay after the end of the TXOP allocated by the AP MLD, the AP MLD considers that the corresponding non-AP MLD has ended the link merging state and returned to the listening operation mode.

By comparing the three implementation methods of the above-mentioned interaction process, it can be seen that: in Implementation method 1, there is no need to modify the existing EMLSR operation and Triggered TXOP Sharing mechanism, and only the method of interacting the EML capability information between devices and performing the EML operation mode notification is added; in Implementation method 2, it is required to indicate the address information of the receiver when applying, the device working in the EMLSR listening mode needs to be able to receive and parse the MU-RTS TXS frame, and to implement the EMLSR link switching and the Triggered TXOP Sharing at the same time, with the minimal signaling overhead, and there is no need to interact the EML capability information between the devices and perform the EML operation mode notification; and in Implementation method 3, it is also required to indicate the address information of the receiver when applying, and the mechanism needs to be modified to avoid a certain device returning to the EMLSR listening state prematurely, and there is no need to interact the EML capability information between the devices and perform the EML operation mode notification.

In summary, by adopting the above-mentioned implementations and examples of the embodiments of the present application, the EMLSR operation may be used for the P2P transmission between the non-AP MLDs, and the AP can schedule the P2P transmission within its BSS. The triggered TXOP sharing is used to realize the advantages of using the EMLSR operation for the P2P transmission between the non-AP MLDs. The introduction of this triggered TXOP sharing mechanism can enable AP MLD to manage and schedule all transmissions within its BSS, preventing invalid transmission from wasting channel resources. The non-AP MLDs working in the EMLSR mode may all perform the P2P transmission through this triggered TXOP sharing mechanism.

It will be noted that the above examples can be combined with various possibilities in the above-mentioned embodiments of the present application, which will not be repeated here.

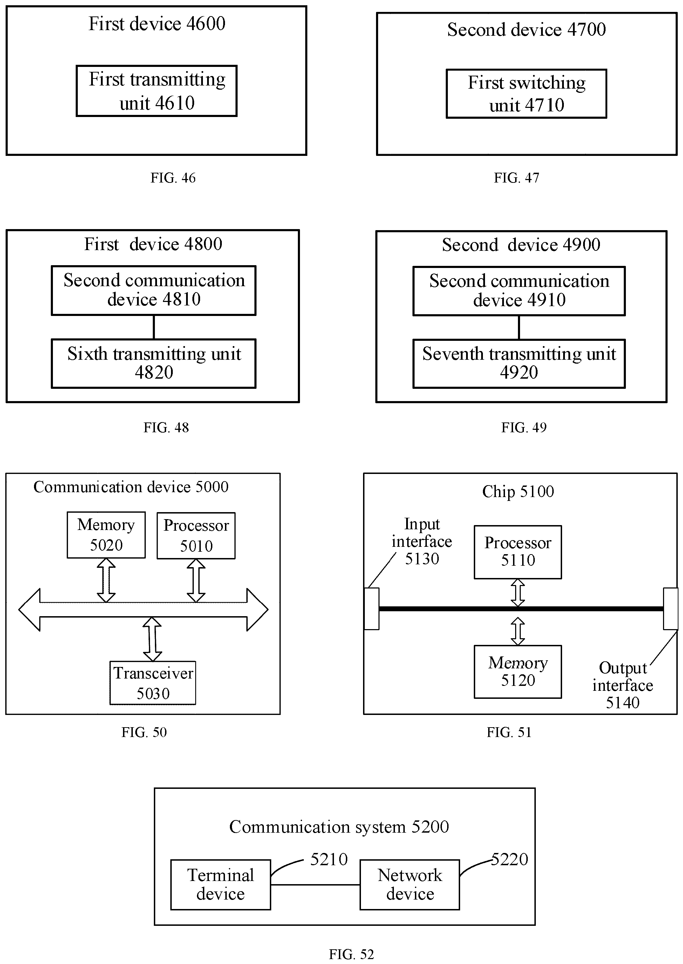

FIG. 46 is a schematic structural diagram of a first device 4600 in accordance with an embodiment of the present application. The device may optionally be applied to the system shown in FIG. 1, but is not limited thereto. The method includes at least part of the following content:
a first transmitting unit 4610, configured to perform frame transmission between the first device 4600 and a second device by using an enhanced multi-link operation, in a case of establishing direct link with the second device working on a same link; where at least one of the first device 4600 and the second device is a device supporting the enhanced multi-link operation or a device working in the enhanced multi-link operation.

In an implementation, the device further includes: a second transmitting unit, configured to apply for a transmission opportunity (TXOP) from a third device. The third device is configured to share the TXOP with the first device 4600 and the second device for the direct link, and to uniformly schedule the frame transmission between the first device 4600 and the second device within a TXOP sharing time.

In an implementation, the first transmitting unit 4610 is further configured to, in a case where the enhanced multi-link operation is an enhanced multi-link single radio (EMLSR) operation, perform frame exchange of single-link multi-spatial streams with the second device on one link of multiple links that the second device has. Here, the multiple links include multiple EMLSR links. In addition, when applied in an EMLMR scenario, the multiple links may further include: multiple EMLMR links.

In an implementation, the first device 4600 is configured to provide services to the second device working in an EMLSR mode; and the second device is configured to support the EMLSR operation and work in the EMLSR mode.

In an implementation, the first device 4600 is configured to provide services to the second device working in an EMLSR mode, and/or to support the EMLSR operation and work in the EMLSR mode; and the second device is configured to provide services to the first device 4600 working in the EMLSR mode, and/or to support the EMLSR operation and work in the EMLSR mode.

In an implementation, the device further includes: an interacting unit, configured to perform an interaction of first capability information when establishing the direct link with the second device; where the first capability is a capability to support the EMLSR operation and capable of providing services to a device working in an EMLSR mode, or a capability to work in the EMLSR mode.

In an implementation, the first capability information is carried in a multi-link element.

In some examples, the multi-link element includes at least one of the following modes.

Mode 1: in a case where the multi-link element is a basic multi-link element, the first capability information is carried by a common information field in the basic multi-link element; where subfields of the first capability information include: a first subfield for indicating the EMLSR mode, and a second subfield for indicating that the EMLSR operation is supported in the direct link.

Mode 2: in a case where the multi-link element is a P2P variant multi-link element, the first capability information is carried by a common information field in the P2P variant multi-link element; where the P2P variant multi-link element further includes: a multi-link control field carrying a third subfield for indicating a type of the multi-link element.

In an implementation, the device further includes: a third transmitting unit, configured to send a first frame to a third device. The first frame carries the subfields of the first capability information, to enable the third device to be informed that the first device 600 supports the EMLSR operation and to be capable of providing services to the second device working in the EMLSR mode.

In an implementation, the device further includes: a fourth transmitting unit, configured to send a first frame to the second device. The first frame carries the subfields of the first capability information, to enable the second device to be informed that the first device 600 supports the EMLSR operation and to be capable of providing services to the second device working in the EMLSR mode.

In an implementation, the device further includes: a first receiving unit, configured to receive a first response frame fed back by the second device, the first response frame carrying the subfields of the first capability information.

In an implementation, the first device 4600 provides services to at least one device working in the EMLSR mode, and/or works in the EMLSR mode after notifying that the EMLSR mode is enabled.

The first device 4600 in the embodiments of the present application can implement the corresponding functions of the first device in the aforementioned method embodiments. The processes, functions, implementation methods and beneficial effects corresponding to various modules (sub-modules, units or components) in the first device 4600 can be found in the corresponding description in the above method embodiments, and will not be repeated here. It will be noted that the functions described in the various modules (sub-modules, units or components) in the first device 4600 in the embodiments of the present application may be implemented by different modules (sub-modules, units or components) or by the same module (sub-module, unit or component).

FIG. 47 is a schematic structural diagram of a second device 4700 in accordance with an embodiment of the present application. The device may optionally be applied to the system shown in FIG. 1, but is not limited thereto. The method includes at least part of the following content:
a first switching unit 4710, configured to perform mode switching of the enhanced multi-link operation with the first device for performing any one of the above-mentioned devices, after interacting with the first device for first capability information.

In an implementation, the second device 4700 is configured to support the mode switching of the enhanced multi-link operation; where the enhanced multi-link operation is an enhanced multi-link single radio (EMLSR) operation.

In an implementation, the switching unit is further configured to: in a case of needing to switch an EMLSR mode, send a second frame to the first device, the second frame carrying a control field to notify switching of the EMLSR mode; where the control field includes a subfield of the EMLSR mode; and in a case of receiving a second response frame fed back by the first device, complete the switching of the EMLSR mode.

In an implementation, the first switching unit 4710 is further configured to: in a case of needing to switch an EMLSR mode, send a second frame to a third device, the second frame carrying a control field to notify switching of the EMLSR mode; where the control field includes a subfield of the EMLSR mode; and in a case of receiving a second response frame fed back by the third device, complete the switching of the EMLSR mode.

In an implementation, the third device is configured to notify switching information by using a third frame at a first time to other devices associated with the third device and supporting the direct link with the second device 4700.

In an implementation, the first time is any time after the switching of the EMLSR mode is completed and before a sharing of a TXOP is triggered to perform the direct link.

In an implementation, the device further includes: a fifth transmitting unit, configured to, in a case of needing to switch to an EMLSR mode, send a fourth frame to a third device to request the third device to notify an EML operation mode of other devices performing the direct link with the second device 4700; where the third device is configured to notify switching information by using a third frame to other devices associated with the third device and supporting the direct link with the second device 4700 after responding to a request.

In an implementation, the third frame carries first information. The first information includes: a fourth subfield for indicating identity information corresponding to a device with peer EML capability, and a fifth subfield for indicating an EMLSR mode corresponding to the device with peer EML capability.

In an implementation, the identity information corresponding to the device with peer EML capability includes a MAC address and/or an AID assigned when associated with the third device.

In an implementation, the fourth frame is a frame of a different type from the third frame, or a frame of a same type as the third frame.

In an implementation, the fourth frame carries a field for indicating that a current frame belongs to a request frame of a device with peer EML capability.

In an implementation, the fourth frame carries a field for indicating that a current frame belongs to a request frame or an advertising frame of a device with peer EML capability.

In an implementation, the fourth frame includes: a first value and first information; where the first value is used to identify an interaction of current EML capability information; and where the first information includes: a fourth subfield for indicating identity information corresponding to the device with peer EML capability, and a fifth subfield for indicating an EMLSR mode corresponding to the device with peer EML capability.

The second device 4700 in the embodiments of the present application can implement the corresponding functions of the second device in the aforementioned method embodiments. The processes, functions, implementation methods and beneficial effects corresponding to various modules (sub-modules, units or components) in the second device 4700 can be found in the corresponding description in the above method embodiments, and will not be repeated here. It will be noted that the functions described in the various modules (sub-modules, units or components) in the second device 4700 in the embodiments of the present application may be implemented by different modules (sub-modules, units or components) or by the same module (sub-module, unit or component).

FIG. 48 is a schematic structural diagram of a first device 4800 in accordance with an embodiment of the present application. The device may optionally be applied to the system shown in FIG. 1, but is not limited thereto. The method includes at least part of the following content:
a first communication unit 4810, configured to establish a direct link relationship between a first STA affiliated with the first device 4800 and a second STA affiliated with a second device; and a sixth transmitting unit 4820, configured to perform frame transmission by using an enhanced multi-link operation between the first STA affiliated with the first device 4800 and the second STA affiliated with the second device according to the direct link relationship; where the first STA affiliated with the first device 4800 sends a sixth frame to the second STA affiliated with the second device in a form of a single-link single-spatial stream.

In an implementation, the first STA affiliated with the first device 4800 and the second STA affiliated with the second device work on a same link.

In an implementation, the device further includes: a first requesting unit, configured to request a required TXOP time from a third device; and a second receiving unit, configured to receive a fifth frame sent by the third device, where the third device is configured to share the TXOP time with the first STA affiliated with the first device 4800 in TXOP sharing mode 2.

In an implementation, the device further includes: a third receiving unit, configured to enable the first STA affiliated with the first device 4800 and the second STA affiliated with the second device both to receive the fifth frame on respective EMLSR link sets they work on and parse the fifth frame.

In an implementation, the device further includes: a second switching unit, configured to enable the first device to perform EMLSR link switching, while the first STA affiliated with the first device 4800 sends the sixth frame to the second STA affiliated with the second device.

In an implementation, the device further includes: a third switching unit, configured to enable the first device 4800 to perform EMLSR link switching within a time period in which the first STA affiliated with the first device 4800 receives and performs feedback to the fifth frame, and/or within a time period in which the first STA affiliated with the first device sends the sixth frame to the second STA affiliated with the second device and receives feedback of the sixth frame.

In an implementation, the sixth frame carries padding information, and the padding information satisfies at least one of the following conditions:
a switching delay requirement of the second device;
a switching delay requirement of the first device; and
a switching delay requirement between the second device and the first device.

In an implementation, the device further includes: a second requesting unit, configured to request a required TXOP time from a third device and indicate first identity information; where the first identity information is identity information of the second STA affiliated with the second device, and the second STA affiliated with the second device and the third device are associated with each other and interact with each other for EML capability information.

In an implementation, the device further includes: a fourth receiving unit, configured to receive the fifth frame or a variant of the fifth frame sent by the third device, where the third device is configured to share the TXOP time with at least one of the first STA affiliated with the first device 4800 and the second STA affiliated with the second device in TXOP sharing mode 2.

In an implementation, the fifth frame or the variant of the fifth frame is used to allocate a TXOP to the at least one of the first STA affiliated with the first device 4800 and the second STA affiliated with the second device.

In an implementation, the fifth frame or the variant of the fifth frame includes a user information list field; and the user information list field is used to request the required TXOP time from the third device.

In an implementation, the user information list field includes: a first indication subfield for indicating a device, a second indication subfield for indicating roles of two parties in direct link, and a third indication subfield for indicating the TXOP time.

In an implementation, the third indication subfield is a second value, and the second value is used to indicate that a current device is a responder for performing the direct link with the first STA affiliated with the first device 4800.

In an implementation, the device further includes: determining the variant of the fifth frame based on values of a first reserved field in common information and a subfield of the first reserved field.

In an implementation, the device further includes: a fifth receiving unit, configured to enable the first STA affiliated with the first device 4800 and the second STA affiliated with the second device both to receive the fifth frame on respective EMLSR link sets they work on and to parse the fifth frame.

In an implementation, the device further includes: a fourth switching unit, configured to, in a case where at least one of the first STA affiliated with the first device 4800 and the second STA affiliated with the second device receives the fifth frame or the variant of the fifth frame, enable at least one of the first device 4800 and the second device to perform EMLSR link switching.

In an implementation, the device further includes: a third requesting unit, configured to request a required TXOP time from a third device and indicate first identity information; where the first identity information is identity information of the second STA affiliated with the second device, and the second STA affiliated with the second device and the third device are associated with each other and exchange EML capability information of each other.

In an implementation, the device further includes: a sixth receiving unit, configured to receive the fifth frame sent by the third device, the third device being configured to share the TXOP time with at least one of the first STA affiliated with the first device 4800 and the second STA affiliated with the second device in TXOP sharing mode 2.

In an implementation, the device further includes: a holding unit, configured to, in a case where the second STA affiliated with the second device that receives the sixth frame completes link switching, continue to hold a state of single-link multi-spatial streams until a second time is reached.

In an implementation, the second time is determined based on a time in which the fifth frame is sent at a lowest rate, a feedback time of the fifth frame, and a short interframe space (SIFS).

In an implementation, the device further includes: a triggering unit, configured to, in a case where the fifth frame is sent to the second STA affiliated with the second device, trigger feedback of the fifth frame.

In an implementation, the device further includes: a first exchange unit, configured to, in a case where at least one of the first device 4800 and the second device completes EMLSR link switching, perform frame exchange of single-link multi-spatial streams.

The first device 4800 in the embodiments of the present application can implement the corresponding functions of the first device in the aforementioned method embodiments. The processes, functions, implementation methods and beneficial effects corresponding to various modules (sub-modules, units or components) in the first device 4800 can be found in the corresponding description in the above method embodiments, and will not be repeated here. It will be noted that the functions described in the various modules (sub-modules, units or components) in the first device 4800 in the embodiments of the present application may be implemented by different modules (sub-modules, units or components) or by the same module (sub-module, unit or component).

FIG. 49 is a schematic structural diagram of a second device 4900 in accordance with an embodiment of the present application. The device may optionally be applied to the system shown in FIG. 1, but is not limited thereto. The method includes at least part of the following content:
a second communication unit 4910, configured to establish a direct link relationship between a first STA affiliated with a first device and a second STA affiliated with the second device 4900; and a seventh transmitting unit 4920, configured to perform frame transmission by using an enhanced multi-link operation between the first STA affiliated with the first device and the second STA affiliated with the second device 4900 according to the direct link relationship; where the second STA affiliated with the second device 4900 receives a sixth frame, and the sixth frame is sent by the first STA affiliated with the first device in a form of a single-link single-spatial stream.

In an implementation, the first STA affiliated with the first device and the second STA affiliated with the second device 4900 work on a same link.

In an implementation, the device further includes: a fifth switching unit, configured to perform EMLSR link switching.

In an implementation, the device further includes: a second exchange unit, configured to perform frame exchange of single-link multi-spatial streams in a case where the second device 4900 completes the EMLSR link switching.

The second device 4900 in the embodiments of the present application can implement the corresponding functions of the second device in the aforementioned method embodiments. The processes, functions, implementation methods and beneficial effects corresponding to various modules (sub-modules, units or components) in the second device 4900 can be found in the corresponding description in the above method embodiments, and will not be repeated here. It will be noted that the functions described in the various modules (sub-modules, units or components) in the second device 4900 in the embodiments of the present application may be implemented by different modules (sub-modules, units or components) or by the same module (sub-module, unit or component).

FIG. 50 is a schematic structural diagram of a communication device 5000 in accordance with an embodiment of the present application. The communication device 5000 includes a processor 5010, and the processor 5010 is capable of calling a computer program from a memory and running the computer program, to enable the communication device 5000 to implement the method in the embodiments of the present application.

Optionally, the communication device 5000 may further include a memory 5020. The processor 5010 is capable of calling a computer program from the memory 5020 and running the computer program to enable the communication device 5000 to implement the method in the embodiments of the present application.

Here, the memory 5020 may be a separate device independent of the processor 5010, or may be integrated into the processor 5010.

Optionally, the communication device 5000 may further include a transceiver 5030, and the processor 5010 is capable of controlling the transceiver 5030 to communicate with other devices, specifically, may control the transceiver 5030 to send information or data to other devices, or to receive information or data sent by other devices.

Here, the transceiver 5030 may include a transmitter and a receiver. The transceiver 5030 may further include an antenna, and the number of antennas may be one or more.

Optionally, the communication device 5000 may be the first device in the embodiments of the present application, and the communication device 5000 may implement the corresponding processes implemented by the first device in each method of the embodiments of the present application, which will not be described again for the sake of brevity.

Optionally, the communication device 5000 may be the second device in the embodiments of the present application, and the communication device 5000 may implement the corresponding processes implemented by the second device in each method of the embodiments of the present application, which will not be described again for the sake of brevity.

FIG. 51 is a schematic structural diagram of a chip 5100 in accordance with an embodiment of the present application. The chip 5100 includes a processor 5110, and the processor 5110 is capable of calling a computer program from a memory and running the computer program, so as to implement the method in the embodiments of the present application.

Optionally, chip 5100 may further include a memory 5126. The processor 5110 is capable of calling a computer program from the memory 5126 and running the computer program, so as to implement the method performed by the first device or the second device in the embodiments of the present application.

Here, the memory 5126 may be a separate device independent of the processor 5110, or may be integrated into the processor 5110.

Optionally, the chip 5100 may further include an input interface 5130. The processor 5110 is capable of controlling the input interface 5130 to communicate with other devices or chips, and specifically, may control the input interface 5130 to obtain information or data sent by other devices or chips.

Optionally, the chip 5100 may further include an output interface 5140. The processor 5110 is capable of controlling the output interface 5140 to communicate with other devices or chips, and specifically, may control the output interface 5140 to output information or data to other devices or chips.

Optionally, the chip may be applied to the first device in the embodiments of the present application, and the chip may implement the corresponding processes implemented by the first device in each method of the embodiments of the present application, which will not be described again for the sake of brevity.

Optionally, the chip may be applied to the second device in the embodiments of the present application, and the chip may implement the corresponding processes implemented by the second device in each method of the embodiments of the present application, which will not be described again for the sake of brevity. The chips applied to the first device and the second device may be the same chip or different chips. It can be understood that the chip mentioned in the embodiments of the present application may also referred to as a system-level chip, a system chip, a chip system, a system-on-chip, or the like.

The above-mentioned processor may be a general-purpose processor, a digital signal processor (DSP), a field programmable gate array (FPGA), an application specific integrated circuit (ASIC) or other programmable logic devices, transistor logic devices, discrete hardware components, or the like. The above-mentioned general-purpose processor may be a microprocessor, or may also be any conventional processor.

The above-mentioned memory may be a volatile (transitory) memory or a non-volatile (non-transitory) memory, or may include both volatile and non-volatile memories. Here, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be random access memory (RAM).

It can be understood that the above-mentioned memory is exemplary but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a Direct Rambus random access memory (Direct Rambus RAM, DR RAM), or the like. That is, the memories in the embodiments of the present application are intended to include but are not limited to these and any other suitable types of memory.

FIG. 52 is a schematic block diagram of a communication system 5200 in accordance with an embodiment of the present application. The communication system 5200 includes a first device 5210 and a second device 5220. The first device 5210 may include: a first transmitting unit, configured to, in a case of establishing direct link with the second device working on a same link, perform frame transmission between the first device and the second device by using enhanced multi-link operation; where at least one of the first device and the second device is: a device supporting the enhanced multi-link operation or a device working in the enhanced multi-link operation. The second device 5220 may include: a first switching unit, configured to perform mode switching of the enhanced multi-link operation with the first device for performing any one of the above-mentioned devices, after interacting with the first device for first capability information. For the sake of brevity, the details will not be repeated here.

The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instruction(s) are loaded on and executed by a computer, processes or functions in accordance with the embodiments of the present application are generated in whole or in part. The computer may be a general-purpose computer, a dedicated computer, a computer network, or any other programmable device. The computer instruction(s) may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It can be understood that in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

Those skilled in the art can clearly understand that, for the convenience and brevity of description, the specific working processes of the systems, devices and units described above can refer to the corresponding processes in the aforementioned method embodiments and will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A communication method, applied to a first device, the method comprising:
in a case where the first device establishes direct link with a second device working on a same link, performing frame transmission between the first device and the second device by using an enhanced multi-link operation;
wherein at least one of the first device and the second device is a device supporting the enhanced multi-link operation or a device working in the enhanced multi-link operation.

2. The method according to claim 1, further comprising:
applying, by the first device, for a transmission opportunity (TXOP) from a third device;
wherein the third device is configured to share the TXOP with the first device and the second device for the direct link, and to uniformly schedule the frame transmission between the first device and the second device within a TXOP sharing time.

3. The method according to claim 1 or 2, wherein performing the frame transmission between the first device and the second device by using the enhanced multi-link operation, comprises:
in a case where the enhanced multi-link operation is an enhanced multi-link single radio (EMLSR) operation, performing, by the first device, frame exchange of single-link multi-spatial streams with the second device on one link of multiple links that the second device has.

4. The method according to claim 3, wherein the multiple links comprise: multiple EMLSR links.

5. The method according to claim 3, wherein the first device is configured to provide services to the second device working in an EMLSR mode; and the second device is configured to support the EMLSR operation and work in the EMLSR mode.

6. The method according to claim 3, wherein the first device is configured to provide services to the second device working in an EMLSR mode, and/or to support the EMLSR operation and work in the EMLSR mode; and
the second device is configured to provide services to the first device working in the EMLSR mode, and/or to support the EMLSR operation and work in the EMLSR mode.

7. The method according to any one of claims 3 to 6, further comprising:
performing, by the first device, interaction of first capability information when establishing the direct link with the second device; wherein the first capability is a capability to support the EMLSR operation and capable of providing services to a device working in an EMLSR mode, or a capability to work in the EMLSR mode.

8. The method according to claim 7, wherein the first capability information is carried in a multi-link element.

9. The method according to claim 8, wherein the multi-link element comprises at least one of following modes:
in a case where the multi-link element is a basic multi-link element, the first capability information is carried by a common information field in the basic multi-link element; wherein subfields of the first capability information comprise: a first subfield for indicating the EMLSR mode, and a second subfield for indicating that the EMLSR operation is supported in the direct link; and
in a case where the multi-link element is a peer-to-peer (P2P) variant multi-link element, the first capability information is carried in a common information field in the P2P variant multi-link element; wherein the P2P variant multi-link element further comprises: a multi-link control field carrying a third subfield for indicating a type of the multi-link element.

10. The method according to claim 9, further comprising:
sending, by the first device, a first frame to a third device; the first frame carrying the subfields of the first capability information, to enable the third device to be informed that the first device supports the EMLSR operation and to be capable of providing services to the second device working in the EMLSR mode.

11. The method according to claim 9, further comprising:
sending, by the first device, a first frame to the second device; the first frame carrying the subfields of the first capability information, to enable the second device to be informed that the first device supports the EMLSR operation and to be capable of providing services to the second device working in the EMLSR mode.

12. The method according to claim 11, further comprising:
receiving, by the first device, a first response frame fed back by the second device, the first response frame carrying the subfields of the first capability information.

13. The method according to any one of claims 10 to 12, wherein the first device provides services to at least one device working in the EMLSR mode, and/or works in the EMLSR mode after notifying that the EMLSR mode is enabled.

14. A communication method, applied to a second device, the method comprising:
performing, by the second device, mode switching of the enhanced multi-link operation with the first device for performing the method of any one of claims 1 to 13, after interacting with the first device for first capability information.

15. The method according to claim 14, wherein the second device is configured to support the mode switching of the enhanced multi-link operation;
wherein the enhanced multi-link operation is an enhanced multi-link single radio (EMLSR) operation.

16. The method according to claim 15, wherein performing the mode switching of the enhanced multi-link operation, comprises:
in a case of needing to switch an EMLSR mode, sending, by the second device, a second frame to the first device, the second frame carrying a control field to notify switching of the EMLSR mode; wherein the control field comprises a subfield of the EMLSR mode; and
in a case of receiving a second response frame fed back by the first device, completing, by the second device, the switching of the EMLSR mode.

17. The method according to claim 15, wherein performing the mode switching of the enhanced multi-link operation, comprises:
in a case of needing to switch an EMLSR mode, sending, by the second device, a second frame to a third device, the second frame carrying a control field to notify switching of the EMLSR mode; wherein the control field comprises a subfield of the EMLSR mode; and
in a case of receiving a second response frame fed back by the third device, completing, by the second device, the switching of the EMLSR mode.

18. The method according to claim 17, wherein the third device is configured to notify switching information by using a third frame at a first time to other devices associated with the third device and supporting the direct link with the second device.

19. The method according to claim 18, wherein the first time is any time after the mode switching of the EMLSR is completed and before a sharing of a transmission opportunity (TXOP) is triggered to perform the direct link.

20. The method according to claim 15, further comprising:
in a case of needing to switch to an EMLSR mode, sending, by the second device, a fourth frame to a third device to request the third device to notify an enhanced multi-link (EML) operation mode of other devices performing the direct link with the second device;
wherein the third device is configured to notify switching information by using a third frame to other devices associated with the third device and supporting the direct link with the second device after responding to a request.

21. The method according to claim 20, wherein the third frame carries first information, wherein
the first information comprises: a fourth subfield for indicating identity information corresponding to a device with peer EML capability, and a fifth subfield for indicating an EMLSR mode corresponding to the device with peer EML capability.

22. The method according to claim 21, wherein the identity information corresponding to the device with peer EML capability comprises: a medium access control (MAC) address and/or an association identifier (AID) assigned when associated with the third device.

23. The method according to claim 20, wherein the fourth frame is a frame of a different type from the third frame or a frame of a same type as the third frame.

24. The method according to claim 20, wherein the fourth frame carries a field for indicating that a current frame belongs to a request frame of a device with peer EML capability.

25. The method according to claim 20, wherein the fourth frame carries a field for indicating that a current frame belongs to a request frame or an advertising frame of a device with peer EML capability.

26. The method according to claim 24 or 25, wherein the fourth frame comprises: a first value and first information, wherein
the first value is used to identify interaction of current EML capability information; and
the first information comprises: a fourth subfield for indicating identity information corresponding to the device with peer EML capability, and a fifth subfield for indicating an EMLSR mode corresponding to the device with peer EML capability.

27. A communication method, applied to a first device, the method comprising:
establishing a direct link relationship between a first station (STA) affiliated with the first device and a second STA affiliated with a second device; and
performing frame transmission by using an enhanced multi-link operation between the first STA affiliated with the first device and the second STA affiliated with the second device according to the direct link relationship;
wherein the first STA affiliated with the first device sends a sixth frame to the second STA affiliated with the second device in a form of a single-link single-spatial stream.

28. The method according to claim 27, wherein the first STA affiliated with the first device and the second STA affiliated with the second device work on a same link.

29. The method according to claim 27 or 28, further comprising:
requiring, by the first STA affiliated with the first device, a required transmission opportunity (TXOP) time from a third device; and
receiving, by the first STA affiliated with the first device, a fifth frame sent by the third device, wherein the third device is configured to share the TXOP time with the first STA affiliated with the first device in TXOP sharing mode 2.

30. The method according to claim 27, further comprising:
enabling the first STA affiliated with the first device and the second STA affiliated with the second device both to receive the fifth frame on respective enhanced multi-link single radio (EMLSR) link sets on which they work and to parse the fifth frame.

31. The method according to claim 29, further comprising:
performing, by the first device, EMLSR link switching, while the first STA affiliated with the first device sends the sixth frame to the second STA affiliated with the second device.

32. The method according to claim 29, further comprising:
performing, by the first device, EMLSR link switching within a time period in which the first STA affiliated with the first device receives the fifth frame and performs feedback to the fifth frame, and/or within a time period in which the first STA affiliated with the first device sends the sixth frame to the second STA affiliated with the second device and receives feedback of the sixth frame.

33. The method according to claim 27 or 28, wherein the sixth frame carries padding information, and the padding information satisfies at least one of following conditions:
a switching delay requirement of the second device;
a switching delay requirement of the first device; and
a switching delay requirement between the second device and the first device.

34. The method according to claim 27 or 28, further comprising:
requesting, by the first STA affiliated with the first device, a required TXOP time from a third device, and indicating, by the first STA affiliated with the first device, first identity information; wherein the first identity information is identity information of the second STA affiliated with the second device, and the second STA affiliated with the second device and the third device are associated with each other and interact with each other for EML capability information.

35. The method according to claim 34, further comprising:
receiving, by the first STA affiliated with the first device, the fifth frame or a variant of the fifth frame sent by the third device, wherein the third device is configured to share the TXOP time with at least one of the first STA affiliated with the first device and the second STA affiliated with the second device in TXOP sharing mode 2.

36. The method according to claim 35, wherein the fifth frame or the variant of the fifth frame is used to allocate a TXOP to the at least one of the first STA affiliated with the first device and the second STA affiliated with the second device.

37. The method according to claim 35 or 36, wherein the fifth frame or the variant of the fifth frame comprises a user information list field; and the user information list field is used to request the required TXOP time from the third device.

38. The method according to claim 37, wherein the user information list field comprises: a first indication subfield for indicating a device, a second indication subfield for indicating roles of two parties in direct link, and a third indication subfield for indicating the TXOP time.

39. The method according to claim 38, wherein the third indication subfield is a second value, and the second value is used to indicate that a current device is a responder for performing the direct link with the first STA affiliated with the first device.

40. The method according to any one of claims 35 to 39, further comprising:
determining, the variant of the fifth frame, based on values of a first reserved field in common information and a subfield of the first reserved field.

41. The method according to any one of claims 35 to 40, further comprising:
enabling the first STA affiliated with the first device and the second STA affiliated with the second device both to receive the fifth frame on respective enhanced multi-link single radio (EMLSR) link sets on which they work and to parse the fifth frame.

42. The method according to any one of claims 35 to 41, further comprising:
in a case where at least one of the first STA affiliated with the first device and the second STA affiliated with the second device receives the fifth frame or the variant of the fifth frame, performing, by at least one of the first device and the second device, EMLSR link switching.

43. The method according to claim 27 or 28, further comprising:
requesting, by the first STA affiliated with the first device, a required TXOP time from a third device, and indicating, by the first STA affiliated with the first device, first identity information; wherein the first identity information is identity information of the second STA affiliated with the second device, and the second STA affiliated with the second device and the third device are associated with each other and interact with each other for EML capability information.

44. The method according to claim 43, further comprising:
receiving, by the first STA affiliated with the first device, the fifth frame sent by the third device, the third device being configured to share the TXOP time with at least one of the first STA affiliated with the first device and the second STA affiliated with the second device in TXOP sharing mode 2.

45. The method according to claim 44, further comprising:
in a case where the second STA affiliated with the second device that receives the sixth frame completes link switching, continuing to hold a state of single-link multi-spatial streams until a second time is reached.

46. The method according to claim 45, wherein the second time is determined based on a time in which the fifth frame is sent at a lowest rate, a feedback time of the fifth frame, and a short interframe space (SIFS).

47. The method according to claim 46, further comprising:
in a case where the fifth frame is sent to the second STA affiliated with the second device, triggering feedback of the fifth frame.

48. The method according to any one of claims 45 to 47, further comprising:
in a case where at least one of the first device and the second device completes EMLSR link switching, performing frame exchange of single-link multi-spatial streams.

49. A communication method, applied to a second device, the method comprising:
establishing a direct link relationship between a first station (STA) affiliated with the first device and a second STA affiliated with a second device; and
performing frame transmission by using an enhanced multi-link operation between the first STA affiliated with the first device and the second STA affiliated with the second device according to the direct link relationship;
wherein the second STA affiliated with the second device receives a sixth frame, and the sixth frame is sent by the first STA affiliated with the first device in a form of a single-link single-spatial stream.

50. The method according to claim 49, wherein the first STA affiliated with the first device and the second STA affiliated with the second device work on a same link.

51. The method according to claim 49 or 50, further comprising:
performing, by the second device, enhanced multi-link single radio (EMLSR) link switching.

52. The method according to claim 51, further comprising:
in a case of completing the EMLSR link switching, performing, by the second device, frame exchange of single-link multi-spatial streams.

53. A first device, comprising:
a first transmitting unit, configured to perform frame transmission between the first device and a second device by using an enhanced multi-link operation, in a case of establishing direct link with the second device working on a same link;
wherein at least one of the first device and the second device is a device supporting the enhanced multi-link operation or a device working in the enhanced multi-link operation.

54. The device according to claim 53, further comprising:
a second transmitting unit, configured to apply for a transmission opportunity (TXOP) from a third device;
wherein the third device is configured to share the TXOP with the first device and the second device for the direct link, and to uniformly schedule the frame transmission between the first device and the second device within a TXOP sharing time.

55. The device according to claim 53 or 54, wherein the first transmitting unit is further configured to:
in a case where the enhanced multi-link operation is an enhanced multi-link single radio (EMLSR) operation, perform frame exchange of single-link multi-spatial streams with the second device on one link of multiple links that the second device has.

56. The device according to claim 55, wherein the multiple links comprise multiple EMLSR links.

57. The device according to claim 55, wherein the first device is configured to provide services to the second device working in an EMLSR mode; and the second device is configured to support the EMLSR operation and work in the EMLSR mode.

58. The device according to claim 55, wherein the first device is configured to provide services to the second device working in an EMLSR mode, and/or to support the EMLSR operation and work in the EMLSR mode; and
the second device is configured to provide services to the first device working in the EMLSR mode, and/or to support the EMLSR operation and work in the EMLSR mode.

59. The device according to any one of claims 55 to 58, further comprising:
an interacting unit, configured to perform interaction of first capability information when establishing the direct link with the second device; wherein the first capability is a capability to support the EMLSR operation and capable of providing services to a device working in an EMLSR mode, or a capability to work in the EMLSR mode.

60. The device according to claim 59, wherein the first capability information is carried in a multi-link element.

61. The device according to claim 60, wherein the multi-link element comprises at least one of following modes:
in a case where the multi-link element is a basic multi-link element, the first capability information is carried by a common information field in the basic multi-link element; wherein subfields of the first capability information comprise: a first subfield for indicating the EMLSR mode, and a second subfield for indicating that the EMLSR operation is supported in the direct link; and
in a case where the multi-link element is a peer-to-peer (P2P) variant multi-link element, the first capability information is carried by a common information field in the P2P variant multi-link element; wherein the P2P variant multi-link element further comprises: a multi-link control field carrying a third subfield for indicating a type of the multi-link element.

62. The device according to claim 60, further comprising:
a third transmitting unit, configured to send a first frame to a third device; the first frame carrying the subfields of the first capability information, to enable the third device to be informed that the first device supports the EMLSR operation and to be capable of providing services to the second device working in the EMLSR mode.

63. The device according to claim 60, further comprising:
a fourth transmitting unit, configured to send a first frame to the second device; the first frame carrying the subfields of the first capability information, to enable the second device to be informed that the first device supports the EMLSR operation and to be capable of providing services to the second device working in the EMLSR mode.

64. The device according to claim 63, further comprising:
a first receiving unit, configured to receive a first response frame fed back by the second device, the first response frame carrying the subfields of the first capability information.

65. The device according to any one of claims 62 to 64, wherein the first device provides services to at least one device working in the EMLSR mode, and/or works in the EMLSR mode after notifying that the EMLSR mode is enabled.

66. A second device, comprising:
a first switching unit, configured to perform mode switching of the enhanced multi-link operation with the first device for performing the method of any one of claims 1 to 13, after interacting with the first device for first capability information.

67. The device according to claim 66, wherein the second device is configured to support the mode switching of the enhanced multi-link operation;
wherein the enhanced multi-link operation is an enhanced multi-link single radio (EMLSR) operation.

68. The device according to claim 67, wherein the switching unit is further configured to:
in a case of needing to switch an EMLSR mode, send a second frame to the first device, the second frame carrying a control field to notify switching of the EMLSR mode; wherein the control field comprises a subfield of the EMLSR mode; and
in a case of receiving a second response frame fed back by the first device, complete the switching of the EMLSR mode.

69. The device according to claim 67, wherein the first switching unit is further configured to:
in a case of needing to switch an EMLSR mode, send a second frame to a third device, the second frame carrying a control field to notify switching of the EMLSR mode; wherein the control field comprises a subfield of the EMLSR mode; and
in a case of receiving a second response frame fed back by the third device, complete the switching of the EMLSR mode.

70. The device according to claim 69, wherein the third device is configured to notify switching information by using a third frame at a first time to other devices associated with the third device and supporting the direct link with the second device.

71. The device according to claim 70, wherein the first time is any time after the switching of the EMLSR mode is completed and before a sharing of a transmission opportunity (TXOP) is triggered to perform the direct link.

72. The device according to claim 67, further comprising:
a fifth transmitting unit, configured to, in a case of needing to switch to an EMLSR mode, send a fourth frame to a third device to request the third device to notify an enhanced multi-link (EML) operation mode of other devices performing the direct link with the second device;
wherein the third device is configured to notify switching information by using a third frame to other devices associated with the third device and supporting the direct link with the second device after responding to a request.

73. The device according to claim 72, wherein the third frame carries first information, wherein
the first information comprises: a fourth subfield for indicating identity information corresponding to a device with peer EML capability, and a fifth subfield for indicating an EMLSR mode corresponding to the device with peer EML capability.

74. The device according to claim 73, wherein the identity information corresponding to the device with peer EML capability comprises: a medium access control (MAC) address and/or an association identifier (AID) assigned when associated with the third device.

75. The device according to claim 72, wherein the fourth frame is a frame of a different type from the third frame or a frame of a same type as the third frame.

76. The device according to claim 72, wherein the fourth frame carries a field for indicating that a current frame belongs to a request frame of a device with peer EML capability.

77. The device according to claim 72, wherein the fourth frame carries a field for indicating that a current frame belongs to a request frame or an advertising frame of a device with peer EML capability.

78. The device according to claim 76 or 77, wherein the fourth frame comprises: a first value and first information, wherein
the first value is used to identify interaction of current EML capability information; and
the first information comprises: a fourth subfield for indicating identity information corresponding to the device with peer EML capability, and a fifth subfield for indicating an EMLSR mode corresponding to the device with peer EML capability.

79. A first device, comprising:
a first communication unit, configured to establish a direct link relationship between a first station (STA) affiliated with the first device and a second STA affiliated with a second device; and
a sixth transmitting unit, configured to perform frame transmission by using an enhanced multi-link operation between the first STA affiliated with the first device and the second STA affiliated with the second device according to the direct link relationship;
wherein the first STA affiliated with the first device sends a sixth frame to the second STA affiliated with the second device in a form of a single-link single-spatial stream.

80. The device according to claim 79, wherein the first STA affiliated with the first device and the second STA affiliated with the second device work on a same link.

81. The device according to claim 79 or 80, further comprising:
a first requesting unit, configured to request a required transmission opportunity (TXOP) time from a third device; and
a second receiving unit, configured to receive a fifth frame sent by the third device, wherein the third device is configured to share the TXOP time with the first STA affiliated with the first device in TXOP sharing mode 2.

82. The device according to claim 79, further comprising:
a third receiving unit, configured to enable the first STA affiliated with the first device and the second STA affiliated with the second device both to receive the fifth frame on respective enhanced multi-link single radio (EMLSR) link sets on which they work and parse the fifth frame.

83. The device according to claim 81, further comprising:
a second switching unit, configured to enable the first device to perform EMLSR link switching, while the first STA affiliated with the first device sends the sixth frame to the second STA affiliated with the second device.

84. The device according to claim 81, further comprising:
a third switching unit, configured to enable the first device to perform EMLSR link switching within a time period in which the first STA affiliated with the first device receives and performs feedback to the fifth frame, and/or within a time period in which the first STA affiliated with the first device sends the sixth frame to the second STA affiliated with the second device and receives feedback of the sixth frame.

85. The device according to claim 79 or 80, wherein the sixth frame carries padding information, and the padding information satisfies at least one of following conditions:
a switching delay requirement of the second device;
a switching delay requirement of the first device; and
a switching delay requirement between the second device and the first device.

86. The device according to claim 79 or 80, further comprising:
a second requesting unit, configured to request a required TXOP time from a third device and indicate first identity information;
wherein the first identity information is identity information of the second STA affiliated with the second device, and the second STA affiliated with the second device and the third device are associated with each other and interact with each other for EML capability information.

87. The device according to claim 86, further comprising:
a fourth receiving unit, configured to receive the fifth frame or a variant of the fifth frame sent by the third device, wherein the third device is configured to share the TXOP time with at least one of the first STA affiliated with the first device and the second STA affiliated with the second device in TXOP sharing mode 2.

88. The device according to claim 87, wherein the fifth frame or the variant of the fifth frame is used to allocate a TXOP to the at least one of the first STA affiliated with the first device and the second STA affiliated with the second device.

89. The device according to claim 87 or 88, wherein the fifth frame or the variant of the fifth frame comprises a user information list field; and the user information list field is used to request the required TXOP time from the third device.

90. The device according to claim 89, wherein the user information list field comprises: a first indication subfield for indicating a device, a second indication subfield for indicating roles of two parties in direct link, and a third indication subfield for indicating the TXOP time.

91. The device according to claim 90, wherein the third indication subfield is a second value, and the second value is used to indicate that a current device is a responder for performing the direct link with the first STA affiliated with the first device.

92. The device according to any one of claims 87 to 91, further comprising:
determining the variant of the fifth frame based on values of a first reserved field in common information and a subfield of the first reserved field.

93. The device according to any one of claims 87 to 92, further comprising:
a fifth receiving unit, configured to enable the first STA affiliated with the first device and the second STA affiliated with the second device both to receive the fifth frame on respective enhanced multi-link single radio (EMLSR) link sets on which they work and to parse the fifth frame.

94. The device according to any one of claims 87 to 93, further comprising:
a fourth switching unit, configured to, in a case where at least one of the first STA affiliated with the first device and the second STA affiliated with the second device receives the fifth frame or the variant of the fifth frame, enable at least one of the first device and the second device to perform EMLSR link switching.

95. The device according to claim 79 or 80, further comprising:
a third requesting unit, configured to request a required TXOP time from a third device and indicate first identity information; wherein the first identity information is identity information of the second STA affiliated with the second device, and the second STA affiliated with the second device and the third device are associated with each other and interact with each other for EML capability information.

96. The device according to claim 95, further comprising:
a sixth receiving unit, configured to receive the fifth frame sent by the third device, the third device being configured to share the TXOP time with at least one of the first STA affiliated with the first device and the second STA affiliated with the second device in TXOP sharing mode 2.

97. The device according to claim 96, further comprising:
a holding unit, configured to, in a case where the second STA affiliated with the second device that receives the sixth frame completes link switching, continue to hold a state of single-link multi-spatial streams until a second time is reached.

98. The device according to claim 97, wherein the second time is determined based on a time in which the fifth frame is sent at a lowest rate, a feedback time of the fifth frame, and a short interframe space (SIFS).

99. The device according to claim 98, further comprising:
a triggering unit, configured to, in a case where the fifth frame is sent to the second STA affiliated with the second device, trigger feedback of the fifth frame.

100. The device according to any one of claims 97 to 99, further comprising:
a first exchange unit, configured to, in a case where at least one of the first device and the second device completes EMLSR link switching, perform frame exchange of single-link multi-spatial streams.

101. A second device, comprising:
a second communication unit, configured to establish a direct link relationship between a first station (STA) affiliated with a first device and a second STA affiliated with the second device; and
a seventh transmitting unit, configured to perform frame transmission by using an enhanced multi-link operation between the first STA affiliated with the first device and the second STA affiliated with the second device according to the direct link relationship;
wherein the second STA affiliated with the second device receives a sixth frame, and the sixth frame is sent by the first STA affiliated with the first device in a form of a single-link single-spatial stream.

102. The device according to claim 101, wherein the first STA affiliated with the first device and the second STA affiliated with the second device work on a same link.

103. The device according to claim 101 or 102, further comprising:
a fifth switching unit, configured to perform EMLSR link switching.

104. The device according to claim 103, further comprising:
a second exchange unit, configured to perform frame exchange of single-link multi-spatial streams in a case where the second device completes the EMLSR link switching.

105. A chip, comprising: a processor, configured to call a computer program from a memory and run the computer program, to enable a device installed with the chip to perform the method in any one of claims 1 to 13, claims 14 to 26, claims 27 to 48, and claims 49 to 52.

106. A computer-readable storage medium for storing a computer program that, when run by a device, enables the device to perform the method of any one of claims 1 to 13, claims 14 to 26, claims 27 to 48, and claims 49 to 52.

107. A computer program product, comprising a computer program instruction enabling a computer to perform the method of any one of claims 1 to 13, claims 14 to 26, claims 27 to 48 and claims 49 to 52.

108. A computer program causing a computer to perform the method of any one of claims 1 to 13, claims 14 to 26, claims 27 to 48 and claims 49 to 52.

109. A communication system, comprising:
a first device, configured to perform the method of any one of claims 1 to 13 and claims 27 to 48; and
a second device, configured to perform the method of any one of claims 14 to 26 and claims 49 to 52.
